# EUROPÄISCHE PATENTSCHRIFT

(11) **EP 1 654 444 B1**
(45) Veröffentlichungstag und Bekanntmachung des Hinweises auf die Patenterteilung: **10.03.2010**
(21) Anmeldenummer: 04764086.7
(22) Anmeldetag: 13.08.2004
(51) Int. Cl.: F01L 13/00, F01L 13/06, F02D 13/02

(54) **VERBRENNUNGSKRAFTMASCHINE MIT SCHALTNOCKEN**
COMBUSTION ENGINE COMPRISING A CONTROL CAM
MOTEUR A COMBUSTION INTERNE A CAME DE COMMANDE

(30) Priorität: 13.08.2003 DE 10337430
(43) Veröffentlichungstag der Anmeldung: 10.05.2006
(73) Patentinhaber: FEV Motorentechnik GmbH, 52078 Aachen (DE); MAHLE Ventiltrieb GmbH, 70376 Stuttgart (DE)
(72) Erfinder: HAHN, Joachim, 52080 Aachen (DE); DJIE, Helge, 52072 Aachen (DE); LAUER, Sven, 52070 Aachen (DE); DUESMANN, Markus, 80935 München (DE); SCHNEIDER, Falk, 70825 Münchingen (DE); STEINMETZ, Christoph, 71634 Ludwigsburg (DE); HOFFMANN, Hermann, 70599 Stuttgart (DE); LECHNER, Martin, 70378 Stuttgart (DE)
(74) Vertreter: Maxton Langmaack & Partner
(86) Internationale Anmeldenummer: PCT/EP2004/009090
(87) Internationale Veröffentlichungsnummer: WO 2005/019612

(56) Entgegenhaltungen:
- WO-A-95/23912
- DE-A- 10 030 904
- DE-A- 10 038 916
- DE-A- 10 141 605
- US-A- 3 144 009
- US-A- 5 103 779
- US-A- 5 505 168
- US-B1- 6 244 257
- US-B1- 6 415 752
- PATENT ABSTRACTS OF JAPAN Bd. 0154, Nr. 73 (M-1185), 29. November 1991 (1991-11-29) & JP 3 202603 A (TOYOTA AUTOM LOOM WORKS LTD), 4. September 1991 (1991-09-04)

## Beschreibung

Die vorliegende Erfindung betrifft eine Kolbenbrennkraftmaschine mit Gaseinlaßventilen und Gasauslaßventilen, die über zumindest eine Nockenwelle betätigbar sind.

Aus der DE 100 38 916 A1 ist es bekannt, eine Kolbenbrennkraftmaschine mit Gaseinlaß- und Gasauslaßventilen vorzusehen, die über Nockenwellen betätigbar sind- Neben einem Hauptnocken ist an der Nockenwelle zumindest ein weiterer Nebennocken angeordnet. Dieser Nebennocken wird durch einen Konturkörper gebildet, der eine Nockenkontur aufweist. Der Konturkörper ist in der Nockenwelle beweglich angeordnet, wobei er zwischen einer aktivierten und einer inaktivierten Stellung verschiebbar ist. Beispielsweise wird er in einer aktivierten Stellung mit der Nockenwelle verriegelt oder aber in einer aktivierbaren Position verschwenkt. Eine Stelleinrichtung, die den Konturkörper in eine Aktivstellung bringen kann, weist zur Krafterzeugung eine Hydraulikeinrichtung auf, mittels der eine Absicherung der Stellung des Konturkörpers erfolgt. Mit Hilfe des Konturkörpers soll eine Schaltung ermöglicht werden, die eine Bremswirkung bei Betätigung des Konturkörpers über eine entsprechende Ventilsteuerung ermöglichen soll.

Aufgabe der vorliegenden Erfindung ist es, ausgehend von diesem Stand der Technik eine Verbesserung einer Nockenwelle mit zumindest einem Konturkörper vorzusehen, mittels der insbesondere ein sicherer Betrieb wie auch eine vielfältige Einsetzbarkeit der Kolbenbrennkraftmaschine ermöglicht wird.

Diese Aufgabe wird mit einer Kolbenbrennkraftmaschine mit den Merkmalen der Ansprüche 1 und 3 gelöst. Weitere vorteilhafte Ausgestaltungen und Weiterbildungen sind in den jeweiligen Unteransprüchen angegeben.

Eine Kolbenbrennkraftmaschine mit Gaseinlaßventilen und Gasauslaßventilen weist zumindest eine Nockenwelle auf, über die die Ventile betätigbar sind. Die Nockenwelle weist zumindest einen Nocken als Steuerkontur auf. Der Nocken hat eine Grundkreiskontur mit einer, die Grundkreiskontur radial überragenden Nockenkontur. Ein Konturkörper mit einer Zusatznockenstruktur weist eine Ruhestellung auf, die gleichzeitig seine Aktivstellung ist, wobei der Konturkörper in seiner Ruhestellung permanent nachgiebig gelagert über die Grundkreiskontur hinausragt und bei einem überfahren mit einem Kraftübertragungsglied radial in seine Grundkreiskontur eingedrückt wird und in seiner Aktivstellung die permanente Nachgiebigkeit blockiert ist. Vorzugsweise wird der Konturkörper radial vollständig eingedrückt. Das Kraftübertragungsglied ist beispielsweise eine Rolle, die an einem ventiltrieb aufgehangen ist. Erfindungsgemäß ist der Konturkörper mit einer Zusatznockenstruktur mittels einer Stelleinrichtung in eine Aktivstellung bringbar und die Stelleinrichtung zur Krafterzeugung weist eine Hydraulikeinrichtung auf, mittels der eine Absicherung der Stellung des Kontiurkörpers erfolgt, wobei der Konturkörper mit einer Zusatznockenkontur in einer Flanke der Nockenkontur so angeordnet ist, dass der Konturkörper in seiner Aktivstellung eine innere Abgasrückführung ermöglicht. Vorgesehen ist, dass der Konturkörper in seiner Aktivstellung eine innere Abgasrückführung ermöglicht. Vorzugsweise wird diese über eine Motorsteuerung geregelt, die für eine entsprechende Aktivierung Meß- und Betriebsdaten nicht nur von der Brennkraftmaschine, sondern auch von der Abgasanlage erhält und auswertet.

Weiterhin ist eine Stelleinrichtung vorgesehen, mittels der ein in eine Aktivstellung bringbarer Konturkörper mit einer Zusatznockenkontur, der in einer Flanke der Nockenkontur angeordnet ist, verschiebbar ist. Dieses erlaubt, daß insbesondere eine Überschneidung von Ventilöffnungs- und Schließungszeiten von Gaseinlaß- und Gasauslaßventilen ermöglicht wird. Eine derartige Überschneidung ist mittels der Zusatznockenkontur einstellbar- Weiterhin ermöglicht die Zusatznockenkontur, daß eine entsprechende Aktivierung nur dann vorgenommen wird, wenn dieses beispielsweise eine Motorregelung vorsieht. Beispielsweise kann dieses für eine interne Abgasrückführung genutzt werden und/oder für eine Bremswirkung, die beispielsweise im Zusammenspiel mit einer Motorbremse ausgelöst wird.

Vorzugsweise ist die Zusatznockenkontur nur in der Aktivstellung über die Flanke der Nockenkontur herausragend. Ist die Zusatznockenkontur nicht in ihrer Aktivstellung, ermöglicht sie vorzugsweise einen annähernd bündigen Abschluß zur übrigen Nockenwellenkontur. Gemäß einer Weiterbildung ist vorgesehen, daß die Zusatznockenkontur und damit der Konturkörper definiert verstellbar in eine Aktivstellung gebracht werden kann. Je nach gewünschter Betätigung des entsprechenden Ventils kann der Konturkörper in seine Endstellung der Aktivstellung wie auch in eine Zwischenstellung verfahren und dort verbleiben. Dieses ermöglicht eine unterschiedliche Öffnung des zu steuernden Ventils. Beispielsweise kann auf diese weise ein Ventil nur zu einem geringen Grad geöffnet bzw. geschlossen werden. Insbesondere ermöglicht dieses, daß Gaseinlaß- und Gasauslaßventile unterschiedlich angesteuert werden können. Dieses ist beispielsweise mittels unterschiedlicher Nockenwellen jeweils für das Gaseinlaß- wie für das Gasauslaßventil möglich. Auch kann mittels einer einzigen Nockenwelle aber unterschiedlich betätigbaren Konturkörpern für Gaseinlaß- und Gasauslaßventile eine Änderung des Gaswechsels erfolgen.

Gemäß einer weiteren Ausgestaltung ist vorgesehen, daß die Zusatznockenkontur in einer Ruhestellung über die Flanke der Nockenkontur herausragt. Dieses ermöglicht eine permanente Ansteuerung der ventile. Dies kann beispielsweise vorgesehen werden, wenn die Kolbenbrennkraftmaschine hauptsächlich in bestimmten Lastbereichen betrieben wird. Vorzugsweise wird dieses bei Stationärmotoren durchgeführt.

Entsprechend einer weiteren Ausgestaltung weist die Nockenwelle eine Anordnung auf, bei der die Zusatznockenkontur zumindest in unmittelbarerer Nähe vor einem Übergang der Nockenkontur in die Grundkreiskontur des Nockens angeordnet ist. Auf diese Weise wird beispielsweise eine Überschneidung der Öffnung des Gaseinlaß- und Gasauslaßventils ermöglicht, wodurch beispielsweise ein Rückströmen von Abgas zurück in den Zylinder ermöglicht werden kann oder Abgas in das Saugsystem ausgestoßen wird, welches anschließend wieder in den Zylinder angesaugt werden kann.

Gemäß einer weiteren Ausführung der Erfindung wird eine Anwendung der Kolbenbrennkraftmaschine mit Gaseinlaß- und Gasauslaßventilen zur internen Abgasrückführung mittels des Konturkörpers mit einer Zusatznockenkontur in einer Flanke der Nockenkontur vorgesehen, bei der der Konturkörper in seiner Aktivstellung eine innere Abgasrückführung ermöglicht. Die Gaseinlaß- und Gaßauslassventile sind über zumindest eine Nockenwelle betätigbar. Ein Nocken weist als Steuerkontur eine Grundkreiskontur und eine, die Grundkreiskontur radial überragende Nockenkontur auf. Mittels einer Stelleinrichtung ist ein in der Nockenwelle angeordneter Konturkörper mit einer Zusatznockenkontur in eine Aktivstellung bringbar, wobei die Stelleinrichtung eine Kraft in Richtung der Aktivstellung des Konturkörpers ausübt, die einstellar veränderbar ist. Dieses ermöglicht, insbesondere in Anpassung an die jeweiligen Betriebsverhältnisse der Kolbenbrennkraftmaschine und insbesondere in Anbetracht der gerade herrschenden Lastbedingungen unterschiedliche Kräfte auf den Konturkörper ausüben zu können. Insbesondere sichert dieses eine verriegelung des Konturkörpers in seiner Aktivstellung. Dadurch ermöglicht beispielweise die Stelleinrichtung unterschiedliche Aktivstellungen des Konturkörpers. Auch ermöglicht das Aufbringen der Kraft in Richtung der Aktivstellung des Konturkörpers eine ausreichende Sicherung desselben im Betrieb. Insbesondere kann diese ausgeübte Kraft auch ein Verstellen des Konturkörpers von einer Aktivstellung in die nächste Aktivstellung unterstützen, insbesondere verursachen.

Die Stelleinrichtung zur Krafterzeugung weist eine Hydraulikeinrichtung auf. Mittels der Hydraulikeinrichtung, die beispielsweise über eine im Kraftfahrzeug angeordnete Ölpumpe betrieben wird, wird eine derartige Kraft aufgebracht, daß darüber beispielsweise eine Absicherung der Stellung des Konturkörpers erfolgt. Solange auf diesen eine Gegenkraft wirkt, die beispielsweise eine Grenzkraft nicht überschreitet, verbleibt der Zusatzkörper in seiner Aktivstellung. Wird eine Grenzkraft überschritten, kann der Zusatzkörper gegen die wirkende Hydraulikkraft wieder in die Nockenwelle hineinverpreßt werden. Dadurch wird ein eventueller, durch den Zusatzkörper entstehender Schaden beispielsweise am ventiltrieb der Kolbenbrennkraftmaschine vermieden.

Vorzugsweise weist die Stelleinrichtung zusätzlich eine Feder auf. Mittels der Feder kann eine Grundkraft auf den Konturköper aufgebracht werden. Diese Grundkraft ermöglicht insbesondere, daß der Konturkörper bei einer Drehung der Nockenwelle durch entsprechende ventiltriebmittel wie beispielsweise ein Stößel und/oder einer Abgriffsrolle immer wieder in eine Ruhelage eingedrückt werden kann. Erst wenn die Hydraulikeinrichtung einen derartigen Druck auf den Konturkörper ausübt, daß er in Aktivstellung verbleibt, wirkt der Konturkörper auf das Ventiltriebmittel ein.

Gemäß einer Weiterbildung ist vorgesehen, daß eine Kraft, die mittels der Stelleinrichtung auf den Konturkörper aufgebracht wird, über ein Hydraulikpolster abgestützt wird. Vorzugsweise wird das Hydraulikpolster durch ein verdrehbares Innenrohr vom Öldruck in der Nockenwelle abgekoppelt und aufrechterhalten. Durch weiteres Verdrehen kann ein Ankoppeln an den Öldruck wieder erfolgen. Mittels beispielsweise eines integrierten Rückschlagventils wird ein Nachfüllen eines Leckageverlustes erlaubt. Auf diese Weise kann ein End- und Verkoppeln des Hydraulikpolsters an die Ölversorgung erfolgen.

Eine weitere Ausgestaltung sieht vor, daß im zugekoppelten Zustand des Hydraulikpolsters an den Öldruck eine Kraft auf den Konturkörper mittels einer Hydraulik aufgebracht wird und diesen abstützt. In einem abgeschalteten Zustand des Hydraulikelementes sinkt der Druck ab, so daß der Konturkörper nur noch mittels einer "Lost-Motion-Feder" abgestützt wird. Eine zusätzliche Abstützung mittels hin und her gepumpten Öls unterbleibt. Vorzugsweise wird ein Öldruck in der Größenordnung zwischen 100 und 120 bar genutzt, da damit eine ausreichende Positionssicherung gegenüber den auftretenden Gegenkräften vorhanden ist. Beispielsweise ist dieser Druck über eine Kolbenpumpe mit einem Kolbendurchmesser von 20 mm erzeugbar.

Gemäß einer weiteren Anwendung der Erfindung wird eine Kolbenbrennkraftmaschine mit Gaseinlaß- und Gasauslaßventilen vorgesehen, bei der der Konturkörper mit einer Zusatznockenkontur in einer Flanke der Nockenkontur so angeordnet ist, dass der Konturkörper in seiner Aktivstellung eine innere Abgasrückführung ermöglicht, wobei die Gaseinlaß- und die Gasauslaßventile über zumindest eine Nockenwelle betätigbar sind, wobei ein Nocken als Steuerkontur eine Grundkreiskontur und eine, die Grundkreiskontur radial überragende Nockenkontur aufweist und ein mittels einer Stelleinrichtung in eine Aktivstellung bringbarer Konturkörper mit einer Zusatznockenkontur in der Nockenwelle angeordnet ist. Eine Konturkörperführung ist exzentrisch zur Nockenwellenmitte und/oder zu einer Ventilübertragungsvorrichtung angeordnet. Auf diese Weise gelingt es, daß angreifende Kräfte zu übertragbaren Drehmomenten führen. Insbesondere ermöglicht dieses im Bezug auf den Konturkörper, daß in diesem eine verbesserte Kraftflußrichtung ermöglicht wird. Diese wird insbesondere so ausgelegt, daß eine Betätigung eines Ventilstößels als Teil der ventilübertragungsvorrichtung beispielsweise unter Verminderung störender Querkräfte erfolgt.

Gemäß einer weiteren Anwendung der Erfindung wird eine Kolbenbrennkraftmaschine mit Gaseinlaß- und Gasauslaßventilen vorgesehen, bei der Konturkörper mit einer Zusatznockenkontur in einer Flanke der Nockenkontur so angeordnet ist, dass der Konturkörper in seiner Aktivstellung eine innere Abgasrückführung ermöglicht, wobei die Gaseinlaß- und die Gasauslaßventile die über zumindest eine Nockenwelle betätigbar sind, wobei ein Nocken als Steuerkontur eine Grundkreiskontur und eine, die Grundkreiskontur radial überragende Nockenkontur aufweist und ein mittels einer Stelleinrichtung in eine Aktivstellung bringbarer Konturkörper mit einer zusatznockenkontur in der Nockenwelle angeordnet ist. Die Stelleinrichtung weist ein, mit einem in Radialrichtung entlang einer Geraden verfahrbaren Konturkörper in Verbindung stehendes mechanisches Koppelglied zur Aktivierung und Feststellung des Konturkörpers auf. Dieses erlaubt insbesondere, daß das mechanische Koppelglied zur Sicherung des Konturköpers und damit zur Verstellung der Zusatznockenkontur in der Nockwelle genutzt werden kann. Beispielsweise nimmt der Konturkörper in seiner Ruhestellung gleichzeitig auch seine Aktivstellung ein.

Vorzugsweise wird beispielsweise ein Koppelglied eingesetzt, daß einen Koppelbolzen aufweist. Mittels dieses Koppelbolzens kann eine mechanische Kraft auf den Konturkörper übertragen werden. Insbesondere kann der Koppelbolzen als Abstützung für den Konturkörper dienen. Gemäß einer Ausgestaltung weist das mechanische Koppelglied, beispielsweise der Koppelbolzen, eine Schräge auf. Über diese Schräge kann der Konturkörper in der Nockenwelle bewegt werden und sich gleichzeitig auch abstützen. Gemäß einer weiteren Ausgestaltung weist das mechanische Koppelglied, beispielsweise der Koppelbolzen, ein Stufensegment auf. Dieses ermöglicht insbesondere, daß mehrere Stufen benachbart zueinander angeordnet werden, die wiederum in ihrer Gesamtheit eine Verstellmöglichkeit des Konturkörpers ermöglichen. Auch kann der Konturkörper sich auf den Stufen direkt abstützen. Eine weitere Ausgestaltung sieht vor, daß das mechanische Koppelglied, beispielsweise der Koppelbolzen, als Kniehebel ausgeführt ist. Dieses ermöglicht einerseits eine Sicherung des Konturkörpers in seiner jeweiligen Position. Zum anderen ermöglicht ein verfahren eines weiteren Bauteiles, welches eine Bewegung eines Teils des Kniehebels bewirkt, die Aktivierung des Kniehebels und damit die Aktivierung des Konturkörpers in eine Position, bei der die Zusatznockenkontur über die Grundkreiskontur herausragt. Eine andere weiterbildung sieht vor, daß der Koppelbolzen als verschiebbarer Stempel ausgeführt ist. Dieses hat insbesondere den Vorteil, daß ein oder mehrere Kantenträger vermieden werden können, die ansonsten eventuell während eines Schaltvorganges notwendig wären. Dabei bezeichnet das Wort "Kantenträger" die unzureichende Überdeckung zwischen Konturkörper und Koppelglied mit der Folge unzulässiger Flächenpressungen.

Gemäß einer weiteren Anwendung der Erfindung, bei der der Konturkörper mit einer Zusatznockenkontur in einer Flanke der Nockenkontur so angeordnet ist, dass der Konturkörper in seiner Aktivstellung eine innere Abgasrückführund ermöglicht, ist insbesondere zur Vermeidung von einem oder mehreren Kantenträgern zwischen der Nockenwelle und einem Stößel bzw. einer Abgriffsrolle eines Stößels der Ventilübertragungsvorrichtung zumindest eine ballige Geometrie vorgesehen. Beispielsweise kann der Stößel mit einer einseitig balligen Scheibe versehen sein. Gemäß einer anderen Ausgestaltung ist bei einer balligen Stößelfläche der Nocken und die Zusatznockenkontur gegensinnig schräg ausgeführt, insbesondere geschliffen. Auf diese weise wird eine Führung ermöglicht, die eine Berührung des Stößels mit der Kante des Zusatznockens und damit ein Überschreiten der zulässigen Pressungen vermeidet.

Gemäß einer weiteren Anwendung der Erfindung, bei der der Konturkörper mit einer Zusatznockenkontur in einer Flanke der Nockenkontur so angeordnet ist, dass der Konturkörper in seiner Aktivstellung eine innere Abgasrückführung ermöglicht, ist vorgesehen, daß die Nockenwelle mehrere Zusatznockenkonturen an Konturkörpern aufweist, die über mehrere Koppelglieder verstellbar sind. Die Koppelglieder stehen untereinander in gekoppelter Verbindung zur Übertragung einer gemeinsamen Aktivierung und vorzugsweise Feststellung der Konturkörper. Insbesondere ist die gekoppelte Verbindung über eine mechanische Kopplung der Koppelbolzen in der Nockenwelle ausgeführt. Eine derartige Verbindung wird beispielsweise über Federn hergestellt. Dieses können Drehfedern oder axial wirkende Federn sein. Diese sind über die Koppelbolzen miteinander verbunden. Bei Betätigung eines ersten Koppelbolzens werden aufgrund der mechanischen Koppelung alle anderen ebenfalls betätigt, beispielsweise gleichzeitig oder nacheinander. Eine Betätigung kann beispielsweise vorsehen, daß die Koppelbolzen eine bestimmte Position einnehmen, die axial wie auch radial definiert ist. Vorzugsweise spuren die Koppelbolzen in eine bestimmte Paßform ein, wodurch die Konturkörper sich insbesondere in einem kraftfreien Zustand einkoppeln können. Im eingekoppelten Zustand bilden die Koppelbolzen wiederum eine Sicherung der Position der Konturkörper. Auf gleiche Weise können auch mehrere Konturkörper gleichzeitig ausgekoppelt werden. Eine weitere Ausgestaltung sieht vor, daß nicht alle Koppelbolzen miteinander gekoppelt sind. Vielmehr sind nur spezielle Koppelbolzen miteinander gekoppelt. Dadurch besteht die Möglichkeit, eine erste und eine zweite Anzahl miteinander gekoppelter Kolbenbolzen vorzusehen, die unabhängig voneinander aktivierbar sind.

Gemäß einer weiterbildung ist vorgesehen, daß der Konturkörper in einer Führung läuft, die vorzugsweise gleichzeitig als Führung für Koppelelemente wie Federn oder ähnliches dient. Dieses erlaubt mit beispielsweise einer einzigen Bohrung in der Nockenwelle einen ausreichenden Platz zur Verfügung zu stellen, in dem alle beweglichen Teile verlaufen.

Eine andere Ausgestaltung sieht vor, daß eine Achse der Koppelelemente, wie beispielsweise eine Feder, in einem winkel zu einer Nockenwellenachse angeordnet ist. Dieses erlaubt eine Kraftübertragung über Ausnutzung eines größeren Verstellweges gegenüber einer ausschließlich radial angeordneten vorrichtung.

Vorzugsweise wird die Kolbenbrennkraftmaschine gemäß zumindest einem der oben beschriebenen Gedanken und weiterbildungen in ein Regelungskonzept zur inneren Abgasrückführung integriert. Beispielsweise kann ein Verfahren zur inneren Abgasrückführung in einer Kolbenbrennkraftmaschine vorgesehen sein, bei dem während des Ansaugens von Frischgas aus einem Einlaßkanal in einen Zylinder ein Auslaßventil geöffnet ist, um zusätzlich Abgas aus einem Auslaßkanal anzusaugen, und/oder während des Ausschiebens von Abgas aus dem Zylinder in den Auslaßkanal ein Einlaßventil geöffnet ist, um einen Teil des Abgases in den Einlaßkanal auszuschieben. Beispielsweise kann eine Entkoppelung des Ladungswechsels von einer inneren Abgasrückführung vorgesehen sein. Dieses erlaubt, beide, den Landungswechsel wie die innere Abgasrückführung, unabhängig voneinander auf die jeweiligen Anforderungen abstimmen zu können.
Insbesondere kann ein Öffnen bzw. Schließen des Einlaß- bzw. Auslaßventils variabel gehalten werden. Dazu weist der Ventiltrieb eine entsprechende Einstellmöglichkeit auf, die beispielsweise im zusammenspiel mit der Nockenwelle funktioniert. Vorzugsweise wird eine Betätigung des Konturkörpers über eine Kennfeldsteuerung mitinitiiert. Dieses erlaubt beispielsweise, daß bei einer, von der Nockenwelle entkoppelten, Steuerung eine Betriebszustandsabhängige Ventilführung ermöglicht wird. Diese Ventilführung kann mittels einer kennfeldgespeicherten Parameterüberprüfung auf den jeweiligen Betriebszustand überprüft und angepaßt werden.

Gemäß einer weiteren Ausgestaltung ist vorgesehen, daß die Kolbenbrennkraftmaschine bei einer Motorbremsung eingesetzt wird. Vorzugsweise ist für eine Motorbremsung der Konturkörper zur Betätigung eines Abgasventils aktivierbar. Beispielsweise wird durch eine entsprechende Ansteuerung der Stelleinrichtung der Konturkörper in eine Aktivstellung gebracht. Dadurch kann ein Auslaßventil zugeschaltet werden, was dadurch eine Motorbremsfunktion bewirkt. Beispielsweise wird das Auslaßventil während eines verdichtens kurzzeitig geöffnet, um den Zylinder gesteuert zu dekomprimieren und dadurch die Brennkraftmaschine zu bremsen. Die gewünschte Bremswirkung ist beispielsweise durch eine Abstimmung der Öffnungs- und Schließzeit sowie eines Hubs des Auslaßventils einstellbar, die vorzugsweise jeweils unabhängig von einer Betätigung der Ladungswechselventile einstellbar sind. Insbesondere durch die Nutzung einer mechanischen Koppelung und Feststellung der Konturkörper ist eine hohe Kraftübertragung gewährleistet, wie sie beispielsweise für eine Bremswirkung über das Auslaßventil notwendig ist. Das Auslaßventil muß gegen den hohen Zylinderinnendruck beim Verdichten geöffnet werden. Durch die mechanische Kopplung des Ventils bis zum Konturkörper wird der entsprechend hohe Druck sicher übertragen.

Gemäß einer weiteren Anwendung der Erfindung wird eine Kolbenbrennkraftmaschine mit Gaseinlass- und Gasauslassventilen zur verfügung gestellt, bei der der Konturkörper mit einer zusatznockenkontur in einer Flanke der Nockenkontur so angeordnet ist, dass der Konturkörper in seiner Aktivstellung eine innere Abgasrückführung ermöglicht, wobei die Gaseinlaß- und die Gasauslaßventile über mindestens eine Nockenwelle betätigbar sind, wobei die einzelnen Nocken als Steuerkontur eine Grundkreiskontur und eine die Grundkreiskontur überragende Nockenkontur aufweisen und wobei für zumindest einen Teil der Ventile, vorzugsweise Gasauslassventile, an den zugeordneten Nocken jeweils ein Konturkörper mit wenigstens einer zusätzlichen Nockenkontur angeordnet ist und dieser Konturkörper in eine die Grundkreiskontur des Nockens überragende Aktivstellung bringbar ist. Der zusätzliche Konturkörper ist in der Form eines Pilzes, aufweisend einen länglichen Hubnocken und einen Führungskörper, der vorzugsweise zylindrisch ausgeführt ist, wobei der längliche Hubnocken zumindest einseitig in einer Nut quer zur Nockenwellen-Achse im Grundkreis- oder/und Nockenprofil der Nockenwelle in der Form einer Verdrehsicherung geführt ist und der radial innen liegende zylindrische Führungskörper in einer Führung, vorzugsweise einer Führungsbohrung, in der Nockenwelle geführt ist und der zusätzliche Konturkörper radial verschiebbar ist. Vorzugsweise ist der Konturkörper mittels der Stelleinrichtung in die Aktivstellung bringbar bzw. in dieser arretierbar.

Der Konturkörper in Form eines Pilzes weist insbesondere einen zumindest dachähnlich ausgestalteten Hubnocken auf und einen Führungskörper auf, auf dem sich der Hubnocken abstützen kann und insbesondere eine Bewegung übertragbar ist. Beispielsweise kann der Hubnocken bzw. der Führungskörper aus mehreren Bauteilen bestehen, die untereinander eine Relativbewegung erlauben. Der Hubnocken bzw. der Führungskörper kann eine feste Länge aufweisen wie auch in seiner Länge verändbar sein. Vorzugsweise überragt der Hubnocken den Führungskörper zumindest teilweise bzw. deckt diesen ab.

Gemäß einer weiterbildung der Kolbenbrennkraftmaschine ist der Durchmesser des zylindrischen Führungskörpers größer ist als die Breite des länglichen Hubnockens.

Vorzugsweise ist der zusätzliche Konturkörper exzentrisch in Nockenwellen-Längsachse angeordnet. Insbesondere kann der zusätzliche Konturkörper exzentrisch zum jeweiligen Nocken angeordnet sein. Eine Weiterbildung sieht vor, dass der jeweilige Nocken und/oder der zusätzliche Konturkörper exzentrisch zum jeweilige Nockenfolger angeordnet ist.

Bei einem ballig ausgeführten Nockenfolger wird vorzugsweise der jeweiligen Nocken und/oder der zusätzliche Konturkörper zur Vermeidung von Kantenträgern in einer besonderen Form, vorzugsweise schräg, konisch, ballig oder räumlich geformt ausgeführt.

Eine weitere Ausgestaltung sieht vor, dass der längliche Hub nocken und/oder der Führungskörper exzentrisch zur Nockenwellen-Längsachse angeordnet ist.

Vorzugsweise wird die radiale Ausfahrbewegung des zusätzlichen Konturköpers durch einen mechanischen Anschlag in der Stelleinrichtung oder im System begrenzt wird.

Gemäß einer Weiterbildung ist vorgesehen, dass zwischen zusätzlichem Konturköper und Nockenwelle eine Kraft, vorzugsweise Federkraft wirkt, die im deaktivierten Zustand den zusätzlichen Konturkörper immer in Kontakt mit dem Anschlag in ausgefahrener Stellung bzw. in Kontakt mit dem Nockenfolger hält.

Vorgesehen ist beispielsweise, dass die Stelleinrichtung durch eine mechanische Abstützvorrichtung gebildet wird, die über Betätigungsmittel betätigt wird. Die Stelleinrichtung kann eine Schub- bzw. Drehstange aufweisen, an der für jeden zu schaltenden Konturkörper ein Stellglied angeordnet ist. Stellglieder an der Stelleinrichtung können indirekt über Speicherelemente, vorzugsweise Federn, angeordnet sein, so dass bei Aktivierung bzw. Abschaltung über die Stelleinrichtung jedes Stellglied selbsttätig zu verschiedenen Zeitpunkten schalten kann. Das Stellglied und der Kontaktbereich im Führungskörper ist vorzugsweise mit dem Stellglied schräg oder in Treppenform ausgeführt. Das Stellglied und der Kontaktbereich im Führungskörper mit dem Stellglied ist gemäß einer weiterbildung in der Form von zwei gegenläufigen Kämmen ausgeführt, um mit geringer Bewegung der Stelleinrichtung einen großen Überdeckungsbereich für die Fixierung des zusätzlichen Konturkörpers sicherzustellen.

Zwischen zylindrischem Führungskörper und Nockenwelle kann weiterhin eine mit der Nockenwelle fix verbundene Führungshülse angeordnet sein. Die Führungshülse beinhaltet beispielsweise die Lagerfunktionen für das jeweilige Stellglied.

Eine weitere Ausgestaltung sieht vor, dass die Stelleinrichtung aus mechanischen Stellgliedern und hydraulischer Ansteuerung besteht. Die mechanischen Stellglieder sind beispielsweise in Nockenwellenlängsachse angeordnet und in dieser hydraulisch und mit Federkraft verschiebbar.

Die mechanischen Stellglieder können auch in einer von der Nockenwelle-Längsachse abweichenden Richtung angeordnet sein, die senkrecht auf die Bewegungsrichtung des zusätzlich Konturkörpers steht und hydraulisch und mit Federkraft verschiebbar sind.

Vorzugsweise ist vorgesehen, dass eine Bohrung für die mechanischen Stellglieder schräg neben den an der Nockenwelle angeordneten Nocken angebracht ist. Beispielsweise ist die Bohrung für die Stellglieder radial durch den Grundkreis des jeweiligen Nockens der Nockenwelle angeordnet.

Das Stellglied kann weiterhin in der Form eines Kniehebels ausgebildet sein und damit einen automatische Arretierung möglich ist.

Auch kann die Stelleinrichtung bzw. die Stellglieder mit der Funktion einer Kugelschreibermechanik ausgeführt sind, d. h. bei einmaligem Betätigen erfolgt automatische Fixierung der Zusatzkontur in der ausgefahrenen Stellung, beim nächsten Betätigen erfolgt automatische Abschaltung der Zusatzkontur.

Weiterhin ist vorgesehen, dass die Stelleinrichtung durch eine hydraulische Abstützvorrichtung gebildet wird, die über Betätigungsmittel betätigbar ist. Auch kann in der Nockenwelle ein Steuerelement, vorzugsweise Rohr angeordnet sein, dass zwischen zylindrischem Führungskörper des zusätzlichen Konturkörpers und der Nockenwelle ein hydraulisches Stellelement angeordnet ist, dass das hydraulische Stellelement in der Form eines hydraulischen Spielausgleichs funktioniert und zusätzlich über das Steuerelement zu- bzw. abschaltbar gestaltet ist. Eine weitere Ausgestaltung sieht vor, dass im Steuerelement Bohrungen angeordnet sind, die durch verschieben oder Drehen die Druckkammer der Stellelemente öffnen oder verschließen.

Eine Weiterbildung sieht vor, dass zwischen zylindrischem Führungskörper des zusätzlichen Konturkörpers und der Nockenwelle die Funktionen eines Spielausgleichs mit vorgesteuertem Rückschlagventil derart angeordnet ist, dass bei fehlendem oder geringem Öldruck kein Ausgleich möglich ist und bei Öldruck bzw. Öldruck über einem definierten Schaltdruck Ausgleich stattfindet und damit der zusätzliche Konturkörper in die aktive Stellung verfährt und fixiert wird.

Vorzugsweise wird zwischen dem zylindrischen Führungskörper und dem Kolben für den Spielausgleich ein zusätzliches Abstützelement derart angeordnet, dass im aktiven Zustand über den Spielausgleich das Abstützelement mit den zusätzlichen Konturkörper auf Anschlag ausgefahren wird und daher das Abstützelement spielfrei am Führungskörper anliegen kann, und dass im deaktivierten Zustand die zwischen zusätzlichem Konturkörper und Abstützelement angeordnete Kraft, vorzugsweise einer Feder, das Abstützelement auf Block, d. h. in die radial innenliegenden Endstellung des Spielausgleichs bringt und die auf den zusätzlichen Konturkörper wirkende Kraft den Kontakt zum Nockenfolger bzw. Anschlag sicherstellt, ohne dass der Spielausgleich zyklisch das Volumen ändert.

Der zylindrische Führungskörper der zusätzlichen Nockenkontur wird beispielsweise über das Abstützelement und eine außenliegende Führungshülse in der Nockenwelle geführt.

Gemäß einer weiteren Ausgestaltung ist vorgesehen, dass die außenliegende Führungshülse als Montageeinheit neben dem Abstützelement und dem Führungselement des zusätzlichen Konturkörpers auch die hydraulischen Komponenten wie Rückschlagventil und vorsteuerungskolben mit Vorsteuerfeder und/oder den Anschlag für die Bewegung der zusätzlichen Nockenkontur beinhaltet. Beispielsweise wird diese Montageeinheit auf Positionen in die Nockenwelle eingepresst, wodurch keine zusätzlichen Einstelltätigkeiten notwendig sind.

Auch kann vorgesehen sein, dass die zusätzliche Hubfunktion des aktiv geschalteten Konturkörpers mindestens eine Ventilbewegung im Grundkreisbereich des Basisnockens bewirkt. Die zusätzliche Hubfunktion des aktiv geschalteten Konturkörpers bewirkt beispielsweise eine geänderte Schließ- oder Öffnungsbewegung, d. h. geänderte Hubfunktion im Bereich Flanke und Grundkreis bzw. Grundkreis und Flanke der Basisbewegung. Das Hubprofil des geschalteten Konturkörper kann entweder am Beginn oder am Ende des wirksamen Bereichs ein vom Grundkreis des Basisnocken verschiedenes Profil aufweisen, um so den übergang zwischen Flanke und Zusatzprofil zu verbessern. Vorzugsweise bewirkt die zusätzliche Hubfunktion des aktiv geschalteten Konturkörpers eine teilweise geänderte Ventilbewegung des Basisventilhubs.

Beispielsweise wird die Hubfunktionsumschaltung mittels zusätzlichem Konturkörper zur Drall- und/oder Tumble-Umschaltung verwendet. Auch kann die Hubfunktionsumschaltung mittels zusätzlichem Konturkörper als Motorbremse verwendet werden. Weiterhin besteht die Möglichkeit, die Hubfunktionsumschaltung mittels zusätzlichem Konturkörper zur inneren Abgasrückführung verwendet wird. Eine Weiterbildung sieht vor, dass die Hubfunktionsumschaltung mittels zusätzlichem Konturkörper zur Verbesserung der Aufladung durch Gasdynamik verwendet wird.

Eine weitere Ausgestaltung sieht vor, dass zur Verbesserung des Kontakts Nockenwelle - Nockenfolger der Nockenfolger mit einem zumindest in Nockenwellenlängsachse beweglichen Kontaktkörper ausgeführt sind. Beispielsweise wird der bewegliche Kontaktkörper am Nockenfolger als Elefantenfuß gebildet.

Auch kann der zusätzliche Konturkörper einlassseitig oder auslassseitig oder einlass- und auslassseitig verwendet werden. Weitere vorteilhafte Ausgestaltungen und Weiterbildungen sind in der nachfolgenden Zeichnung näher erläutert. Die dort beschriebenen Ausgestaltungen und Merkmale sind jedoch nicht auf die einzelnen Weiterbildungen beschränkt. Vielmehr können diese mit anderen Merkmalen und Ausgestaltungen, wie sie beispielsweise aus der obigen Beschreibung hervorgehen bzw. bezüglich anderer Ausgestaltungen der Figuren beschrieben sind, zu weiteren Lösungen führen. Es zeigen:
- Fig. 1: eine schematische Ansicht einer Kolbenbrennkraftmaschine,
- Fig. 2: ein Diagramm bezüglich eines beispielhaften Nockenverlaufes einer Kurbelwelle,
- Fig. 3: eine erste Nockenwelle mit einem verschiebbaren Konturkörper,
- Fig. 4: eine Aufsicht auf die Nockenwelle aus Fig. 3,
- Fig. 5: eine zweite Nockenwelle mit einer balligen Führung,
- Fig. 6: eine Aufsicht auf die zweite Nockenwelle,
- Fig. 7: einen Längsschnitt durch eine dritte Nockenwelle,
- Fig. 8: einen Querschnitt durch die dritte Nockenwelle aus Fig. 7,
- Fig. 9: einen Längsschnitt durch eine vierte Nockenwelle,
- Fig. 10: einen Querschnitt durch die vierte Nockenwelle aus Fig. 9,
- Fig. 11: einen Längsschnitt durch eine fünfte Nockenwelle,
- Fig. 12: einen Querschnitt durch die fünfte Nockenwelle aus Fig. 11,
- Fig. 13: einen Längsschnitt durch eine sechste Nockenwelle,
- Fig. 14: einen Längsschnitt durch eine siebte Nockenwelle,
- Fig. 15: einen Längsschnitt durch eine achte Nockenwelle,
- Fig. 16: einen Längsschnitt durch eine neunte Nockenwelle,
- Fig. 17: eine schematische Ansicht einer mechanischen Verstellmöglichkeit in einer Nockenwelle,
- Fig. 18: einen Querschnitt durch eine zehnte Nockenwelle,
- Fig. 19: einen Längsschnitt durch eine elfte Nockenwelle,
- Fig. 20: einen Längsschnitt durch eine zwölfte Nockenwelle und
- Fig. 21: einen Längsschnitt durch eine dreizehnte Nockenwelle.

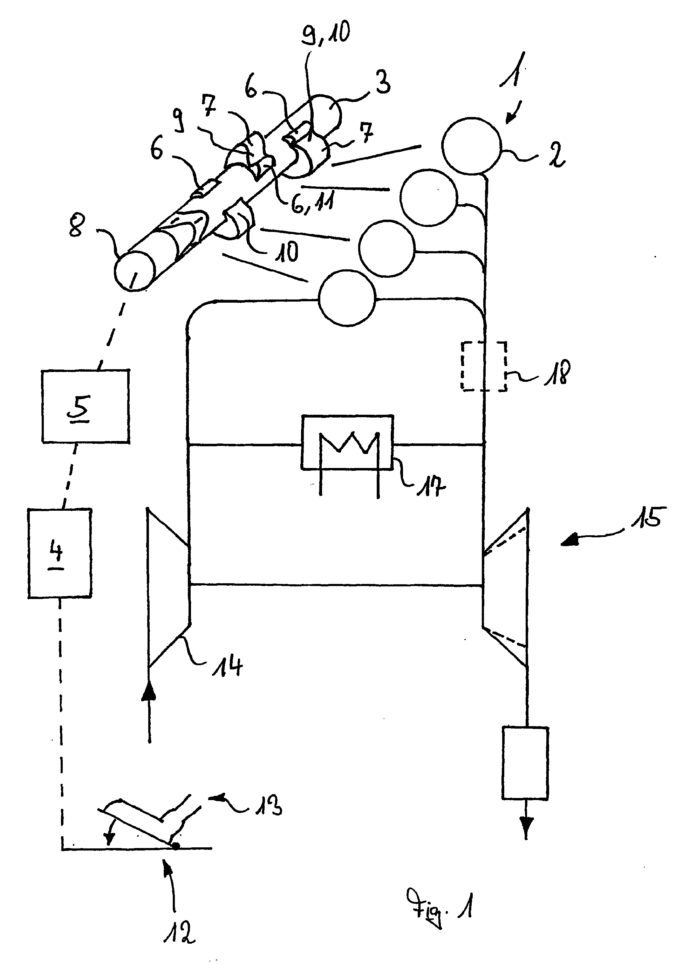

Fig. 1 zeigt in schematischer Ansicht einen Ausschnitt aus einem Kraftfahrzeug mit einer Kolbenbrennkraftmaschine 1. Die Kolbenbrennkraftmaschine 1 ist angedeutet durch vier Zylinder 2, die einerseits mit einer Nockenwelle und zugehörigen, nicht näher dargestellten Gaseinlaß- und Gasauslaßventilen, und andererseits mit einer entsprechenden Zu- und Abgasführung verbunden ist. Zusätzlich ist ein Motorsteuergerät 4 vorhanden, das in Verbindung mit einer Stelleinrichtung 5 steht. Die Stelleinrichtung 5 ist in der Lage, in der Nockenwelle 3 Konturkörper 6 zu verstellen. Die Nockenwelle 3 weist neben Nocken 7 die Konturkörper 6 auf. Die Nocken 7 wie auch die Konturkörper 6 ragen über eine Grundkreiskontur 8 heraus. Die Konturkörper 6 sind vorzugsweise in einer Flanke 9 einer Nockenkontur angeordnet, können davon jedoch auch getrennt vorliegen. Die Nockenkonturen 10 gehen in Zusatznockenkonturen 11 über, wenn die Konturkörper 6 sich in einer Aktivstellung befinden.

Mittels der Nockenwelle 3 werden Ventileinrichtungen betrieben, so daß die Gaseinlaß- und die Gasauslaßventile entsprechend der Nockenkontur 10 bzw. Zusatznockenkontur 11 geöffnet bzw. geschlossen werden. Durch eine Verstellung der Konturkörper 6 und damit Veränderung der Geometrie der Nockenwelle 3 kann je nach Betriebsbedingung eine Änderung des Öffnungs- bzw. Schließverhaltens von einem oder mehreren Ventile, insbesondere Gaseinlaß- und/oder Gasauslaßventilen beeinflußt werden. Beispielsweise ist hierfür im Motorsteuergerät 4 eine entsprechende Ansteuerung vorgesehen, die über die Stelleinrichtung 5 ausgeführt wird. Das Motorsteuergerät 4 weist vorzugsweise mehrere Eingänge für Parameter auf, die den Betrieb zumindest der Kolbenbrennkraftmaschine 1 charakterisieren. Zusätzlich sind weitere Parameter aufnehmbar und können nach entsprechender Auswertung zu Steuersignalen an die Stelleinrichtung 5 führen. Beispielsweise wird über eine Betätigungseinrichtung 12, die beispielsweise von einem Bediener 13 aktivierbar ist, ein Signal an das Motorsteuergerät 4 weitergegeben. Dieses Signal kann beispielsweise ein Bremssignal, ein Gassignal oder einen sonstigen, einen Wunsch des Bedieners 13 charakterisierenden Parameter darstellen. Will der Bediener 13 beispielsweise das Kraftfahrzeug beschleunigen, nimmt das Muttersteuergerät 4 über die Betätigungseinrichtung 12 ein entsprechendes Stellsignal auf. Das Stellsignal wird ausgewertet und, sofern notwendig, über die Stelleinrichtung 5 eine entsprechende Anpassung der Geometrie der Nockenwelle 3 ausgeführt. Soll beispielsweise eine negative Beschleunigung erfolgen, wie es bei Ausführung einer Motorbremse der Fall ist, werden beispielsweise die Gasauslaßventile über eine entsprechende Verstellung der Konturkörper 6 geschaltet. Andererseits ermöglicht die Auswertung durch das Motorsteuergerät 4 beispielsweise eine mittels der Stelleinrichtung 5 vorgenommene innere Abgasrückführung durch entsprechende Betätigung der Gaseinlaß- und Gasauslaßventile.

Eine Abgasrückführung, wie sie in Fig. 1 dargestellte ist, kann beispielsweise außermotorisch und innermotorisch erfolgen. Insbesondere kann beides, so wie in Fig. 1 dargestellt, miteinander kombiniert sein. Für die außermotorische Abgasrückführung wird beispielsweise über einen Verdichter 14 eines Abgasturboladers 15 Luft zur Kolbenbrennkraftmaschine 1 angesaugt und verdichtet. Eine Turbine 16 des Abgasturboladers 15 nutzt das von der Kolbenbrennkraftmaschine 1 abströmende Abgas, um die notwendige verdichtungsenergie für den verdichter 14 zu erbringen. Die Turbine 16 weist vorteilhafter Weise eine Verstellung der Einlaßgeometrie und/oder der Schaufeln auf. Auch kann der Verdichter 14 eine entsprechende Geometrieverstellung aufweisen. Dieses erlaubt eine Anpassung der Zuluft- bzw. Abgasströme bzw. der Energieausbeute aus derselben an die entsprechenden vorliegenden Strömungsverhältnisse in den unterschiedlichen Betriebspunkten einer Kolbenbrennkraftmaschine 1. Für die außermotorische Abgasrückführung kann vor der Turbine 16 ein Teil des Abgases abgeleitet und der durch den Verdichter 14 verdichteten Luft zugeführt werden. Vorzugsweise wird das abgeleitete Abgas durch einen Wärmetauscher 17 geführt und entsprechend heruntergekühlt der Luft beigegeben. Das Verhalten des Abgasturboladers 15 kann insbesondere in Abhängigkeit von dem umgeleiteten Abgasstrom abhängen und wird daher vorzugsweise über das Motorsteuergerät 4 entsprechend der Strömungsverhältnisse angepaßt insbesondere bezüglich der Geometrieverstellung betrieben. Über nicht näher dargestellte Strömungsführungen kann das Umleiten eines Teils des Abgasstromes insbesondere mittels des Motorsteuergerätes 4 an die jeweiligen Betriebsbedingungen der Kolbenbrennkraftmaschine 1 angepaßt werden. Eine innere Abgasrückführung wird vorzugsweise über das Motorsteuergerät 4 initiiert. Dieses erfolgt vorzugsweise in Korrelation mit der äußeren Abgasrückführung. Für die innere Abgasrückführung wird mittels der Stelleinrichtung 5 eine entsprechende Verstellung der Konturkörper 6 durchgeführt. Beispielsweise ermöglicht dieses ein Einströmen eines Teils des Abgasstromes durch das Gasauslaßventil zu einem Zeitpunkt, wenn über das Gaseinlaßventil Gas in die Zylinder 2 zugeführt wird. Weiterhin kann eine innere Abgasrückführung dadurch unterstützt werden, daß ein Zusatzwärmetauscher 18 vorgesehen ist. Dieser ist vorzugsweise in unmittelbarer Nähe zum Gasauslaßventil angeordnet. Der Zusatzwärmetauscher 18 ermöglicht insbesondere bei einer über einen breiten Betriebsbereich der Kolbenbrennkraftmaschine 1 durchgeführten inneren Abgasrückführung eine Abkühlung des in die Zylinder 2 zurückströmenden Abgasstromes.

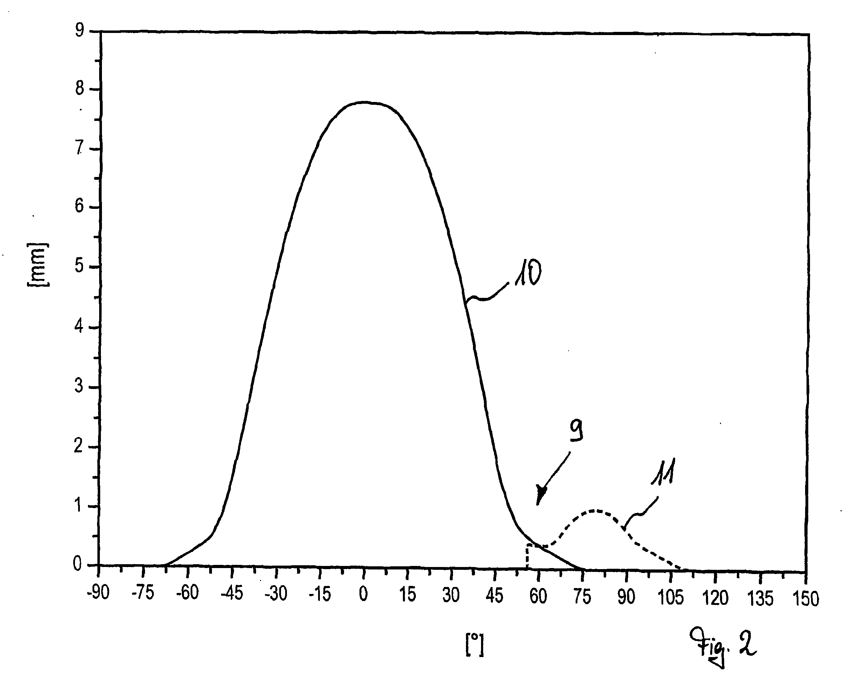

Fig. 2 zeigt eine schematische Ansicht eines Diagramms bezüglich einer beispielhaften Ventilerhebung und damit eines Nockenverlaufs einer Nockenwelle. Auf der Y-Achse ist eine Höhe einer ventilerhebung aufgetragen, von der aus auf eine Erstreckung einer Nocke über die Grundkreiskontur der Nockenwelle abgeleitet werden kann. Auf der X-Achse ist der Nockenwellendrehwinkel angegeben. Gemäß der dargestellten Ausgestaltung weist die Nockenwelle neben der Nockenkontur 10 die Zusatznockenkontur 11 in der Flanke 9 der Nockenkontur 10 auf. Vorzugsweise ist eine höchste Erhebung der Zusatznockenkontur 11 in einem Nockendrehwinkel zwischen 50° und 95° angeordnet, insbesondere zwischen 70° und 90°, vorzugsweise zwischen 75° und 80°. Insbesondere verläuft die zusatznockenkontur 11 derart, daß die höchste Erhebung der Zusatznockenkontur 11 in einem verhältnis zur höchsten Ventilerhebung der Nockenkontur 10 von etwa zwischen 1 : 9 bis 1 : 4 liegt, vorzugsweise zwischen 1 : 8, 5 und 6, insbesondere zwischen 1 : 8 und 1 : 7, 5. Die höchste Ventilerhebung ist dabei über die maximale Aktivstellung des Konturkörpers ermittelbar. Der Konturkörper kann jedoch auch andere Aktivstellungen aufweisen, bei denen die Zusatznockenkontur 11 zu einem geringeren Prozentsatz über die Grundkreiskontur herausragt. Neben der Anordnung der Zusatznockenkontur 11 in der Flanke 9 der Nockenkontur 10 besteht die Möglichkeit, daß insbesondere für eine innere Abgasrückführung die Zusatznockenkontur 11 außerhalb der Flanken 9 der Nockenkontur 10 angeordnet ist.

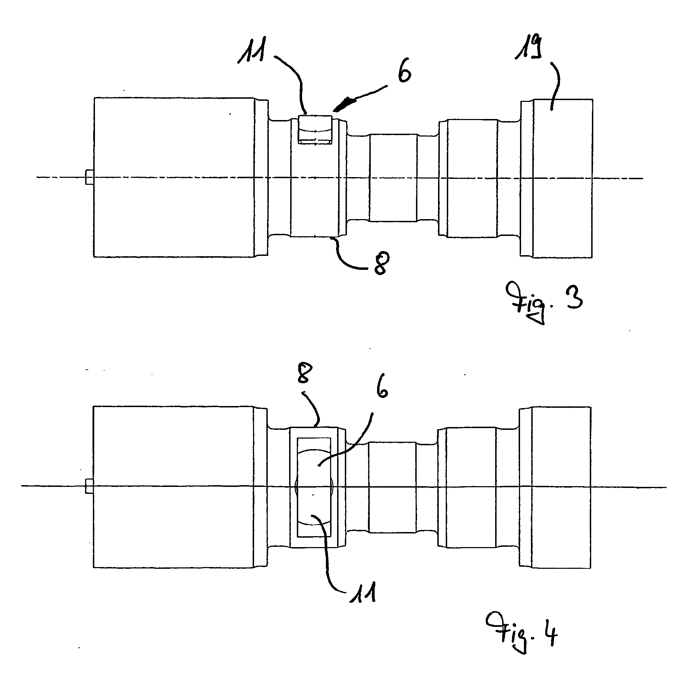

Fig. 3 zeigt eine erste Nockenwelle 19 mit einem Konturkörper 6, der über die Grundkreiskontur 8 hinaus verschiebbar angeordnet ist. Der Konturkörper 6 weist eine zusatznockenkontur 11 auf, deren Erhebung über die Grundkreiskontur 8 herausragt. Der Konturkörper 6 ist radial beweglich in der ersten Nockenwelle 19 angeordnet. Hierzu kann er entlang einer in der ersten Nockenwelle 19 vorhandenen Führung radial ein- wie auch ausgefahren werden. Je nachdem, wie stark sich der Konturkörper 6 von der Grundkreiskontur 8 abhebt, wird eine entsprechende Beeinflussung eines Ventiltriebes der Kolbenbrennkraftmaschine erfolgen. Neben dem dargestellten Konturkörper 6 können auch ein oder mehrere zusätzliche Konturkörper in der ersten Nockenwelle 19 angeordnet sein.

Fig. 4 zeigt die erste Nockenwelle 19 aus Fig. 3 in einer Aufsicht. Der Konturkörper 6 weist eine derartige Geometrie auf, daß er einen übergang von seiner Nockenkontur 10 in die Grundkreiskontur 8 hat. Die Zusatznockenkontur 11 ermöglicht insbesondere ein Bereitstellen einer Übertragungsfläche auf einen Ventiltrieb, die auch bei andauernder Belastung ausreichend ist, um eine zu starke punktförmige Belastung des Konturkörpers 6 zu vermeiden.

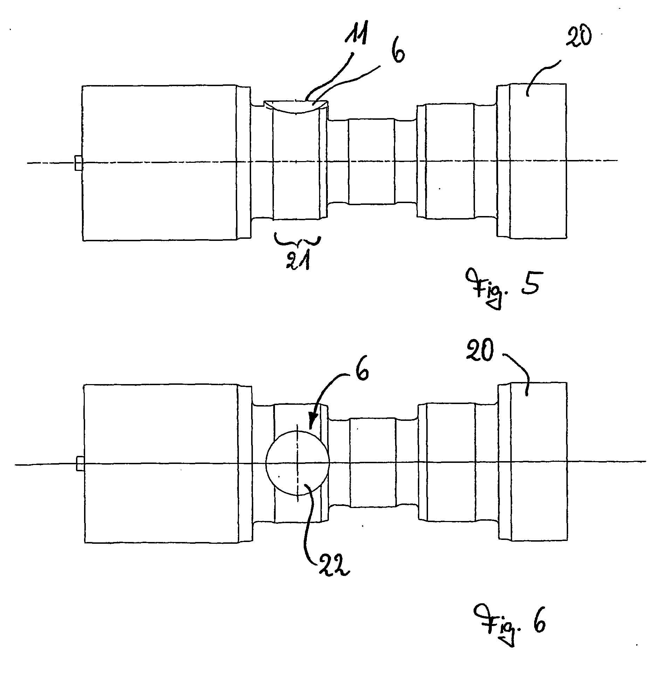

Fig. 5 zeigt eine zweite Nockenwelle 20 in einer Längsansicht. Die zweite Nockenwelle 20 weist den Konturkörper 6 in einer gebogenen, insbesondere gerundeten Form auf. Der Konturkörper 6 weist beispielsweise eine pilsähnliche Gestalt auf. Der hier nicht näher dargestellte Stiel ist in der zweiten Nockenwelle 20 zumindest zum größten Teil versenkt angeordnet. Auf dem Stiel befindet sich ein entsprechender Kopf, der die Zusatznockenkontur 11 bildet. Der Stiel und die zusatznockenkontur 11 bilden den Konturkörper 6. Der Konturkörper 6 kann einstöckig wie auch mehrstöckig gestaltet sein. Beispielsweise kann der Stiel vom Kopf getrennt hergestellt werden, wobei beide Bauteile anschließend zusammengefügt werden. Vorzugsweise wird der Kopf des Konturkörpers 6 derart ausgestaltet, daß eine Breite 21 der Grundkreiskontur 8 überragt wird. Der Kopf kann auf diese Weise eine besondere Schutzfunktion gegenüber dem in der zweiten Nockenwelle 20 angeordneten Stiel aufweisen. Durch die Überdeckung der gesamten Breite 21 wird ermöglicht, daß der Stiel sehr nah an Endbereiche der Breite 21 vorstößt. Der Kopf des Konturkörpers 6 verhindert ein Eindringen von beispielsweise kleinen Partikeln in die zweite Nockenwelle 20 und vermeidet dadurch Betriebsstörungen.

Fig. 6 zeigt die zweite Nockenwelle 20 aus Fig. 5 in einer Aufsicht. Der Konturkörper 6 ist in dieser Aufsicht mit seinem Kopf 22 dargestellt, wobei der Kopf 22 vorzugsweise rund ist. Er kann jedoch jede andere Geometrie aufweisen, beispielsweise ein Oval oder auch eine Mischung zwischen runden und graden Geometrien aufweisen. Eine kreisrunde Geometrie hat beispielsweise den Vorteil einer leichteren Herstellbarkeit.

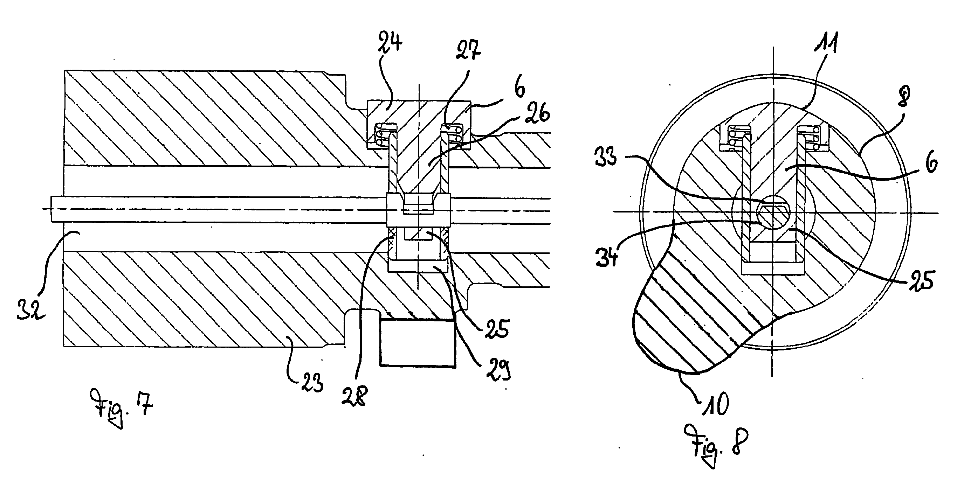

Fig. 7 zeigt einen Längsschnitt durch eine dritte Nockenwelle 23. In der dritten Nockenwelle 23 ist ein Konturkörper 6 angeordnet. Der Konturkörper 6 kann beispielsweise eine Geometrie aufweisen, wie sie aus Fig. 5 und Fig. 6 hervorgeht. Der in Fig. 7 dargestellte Konturkörper 6 weist ein Kopfteil 24 auf, das übergeht in einen Fußbereich 25. zwischen dem Kopfteil 24 und dem Fußbereich 25 ist ein Mittelteil 26 angeordnet. Über den Mittelteil 26 wird eine Führung in der dritten Nockenwellen 23 in radialer Richtung gewährleistet. Über den Fußbereich 26 wird ein verschieben des Konturkörpers 6 aus oder dritten Nockenwelle 23 bzw. in diese hinein gesteuert. Vorzugsweise ist das Kopfteil 24 mit einer Kraft beaufschlagt, die das Kopfteil 24 radial nach außen preßt. Beispielsweise wird diese Kraft, die vorzugsweise nur radial wirkt, mittels einer Feder 27 aufgebracht. Die Feder 27 kann beispielsweise zwischen dem Kopfteil 24 und der dritten Nockenwelle 23 angeordnet sein, wobei sich die Feder 27 an beiden abstützt. Die dritte Nockenwelle 23 weist hierfür vorzugsweise eine Aussparung auf. Die Aussparung nimmt vorzugsweise nicht nur die Feder 27, sondern auch das Kopfteil 24 zumindest teilweise auf. Die Aussparung sowie das Kopfteil 24 sind insbesondere derart paßgenau aufeinander abgestimmt, daß ein Eindringen von insbesondere Partikeln verhindert wird. Insbesondere kann die Passung derart gewählt werden, daß ein Eindringen bzw. Austreten von beispielsweise Flüssigkeit, insbesondere Öl aus der dritten Nockenwelle 23 verhindert wird. Das Kopfteil 24 weist vorzugsweise im Zusammenspiel mit dem Mittelteil 26 in Querschnittsansicht eine T-Form auf. Die Bildung von entsprechenden Hohlräumen, insbesondere um den Umfang des Mittelteils 26 herum verlaufende Hohlräumen ermöglicht die Anordnung der Feder 27 in diesem. Das Mittelteil 26 ist weiterhin von einer Hülse 28 umgeben. Die Hülse 28 ermöglicht ein verfahren des Mittelteils 26 in ihr. Zum anderen zentriert die Hülse 28 den Konturkörper 6 derart, daß ein Auftreten von Querkräften und damit Verkanten des Konturkörpers 6 vermieden wird. Die Hülse 28 greift dazu vorzugsweise in eine Aussparung 29 ein. Insbesondere kann die Hülse 28 auch in der Aussparung 29 geführt verschoben werden. Dadurch wird einerseits der Konturkörper 6 mittels der Hülse 28 zentriert, die wiederum über eine entsprechende Abstützung in der dritten Nockenwelle 23 ihre Zentrierung erhält. Eine Einfahr-bzw. Ausfahrbewegung des Konturkörpers 6 in bzw. aus der dritten Nockenwelle 23 heraus wird beispielsweise über ein Betätigungsmittel 30 durchgeführt. Das Betätigungsmittel 30 kann mechanische, hydraulisch, pneumatisch, elektromagnetisch, elektromechanisch und/oder Kombinationen bzw. andere Stellmöglichkeiten aufweisen. Die in Fig. 7 dargestellte Ausgestaltung weist eine Verstellstange 31 auf. Die verstellstange 31 verläuft durch einen Hohlbereich 32 der dritten Nockenwelle 23. Die Verstellstange 31 ist vorzugsweise entlang einer Nockenwellenmitte 33 verlaufend. Die Verstellstange 31 erlaubt eine mechanische Verbindung mit dem Konturkörper 6. Der Konturkörper 6 wird über eine Bestätigung der Verstellstange 31 in seiner Position verändert. Insbesondere erlaubt ein Verstellen der Verstellstange 31 ein Versetzen des Konturkörpers 6 in eine Aktivstellung bzw. in eine Ruhestellung.

Fig. 8 zeigt einen Querschnitt durch die dritte Nockenwelle 23 und den Konturkörper 6 aus Fig. 7. Der Konturkörper 6 kann im übrigen rund wie auch eckig geformt sein, wobei die Zusatznockenkontur 11 an die Grundkreiskontur 8 angepaßt ist. Die Zusatznockenkontur 11 ist vorzugsweise derart ausgestaltet, daß sie in einer Ruhestellung des Konturkörpers 6 bündig in die Grundkreiskontur 8 übergeht. In Fig. 8 ist der dort dargestellte Konturkörper 6 in einer Ruhestellung. In dieser Ruhestellung ragt er über die Grundkreiskontur 8 hinaus. Im Fußbereich 25 des Konturkörpers 6 ist ein Durchgang 33 angeordnet. Durch diesen Durchgang 33 verläuft die Verstellstange 31. Die verstellstange 31 weist in diesem Bereich ein Profil auf, das eine Verdrehung einer Stellfläche 34 derart ermöglicht, daß dadurch der Konturkörper 6 von einer Ruhestellung in eine Aktivstellung überführbar ist. Vorzugsweise wird die dafür notwendige Verstellkraft mittels der radial wirkenden Kraft, insbesondere der Feder 27 aufgebracht. Die Stellfläche 34 wirkt einerseits als Arretiermittel, um den Konturkörper 6 in seiner Ruhestellung festzuhalten. Andererseits dient die Stellfläche 34 als Arretiermittel und Kraftübertragungsfläche für den Konturkörper 6 in seiner Aktivstellung, wirken mechanische Kräfte auf die Zusatznockenkontur 11 ein, werden diese über das Kopfteil 24 und den Mittelteil 26 in den Fußbereich 25 übertragen. Dort können die auftretenden Kräfte mittels der Stellfläche 34 in die verstellstange 31 übertragen werden. Die Verstellstange 31 ist ausreichend abgestützt, um die auf die Zusatznockenkontur 11 aufgebrachten insbesondere radial wirkenden Kräfte auffangen und kompensieren zu können. Der Konturkörper 6 ist somit in seiner Aktivstellung fest arretierbar. Um eine ausreichende Zentrierung zwischen dem Konturkörper 6 und der Nockenwelle 23 im Zusammenspiel mit der Hülse 28 zu gewährleisten, verläuft die verstellstange 31 ebenfalls durch eine entsprechende Öffnung in der Hülse 28. vorzugsweise kann die verstellstange 31 sich ebenfalls paßgenau in dieser Öffnung abstützen. Dadurch überträgt sich bei einer Verdrehung der Verstellstange 31 die entsprechende radial wirkende Bewegung nicht nur auf den Konturkörper 6, sondern zusätzlich auch auf die Hülse 28. Gemäß einer weiteren Ausgestaltung bleibt bei einer Verdrehung der verstellstange 31 die Hülse 28 an ihrer Position. Wie aus Fig. 8 weiterhin hervorgeht, ist neben der Zusatznockenkontur 11 eine Nockenkontur 10 angeordnet. Die Nockenkontur 10 ist getrennt von der Zusatznockenkontur 11 vorhanden. Dieser versatz zwischen Zusatznockenkontur 11 und Nockenkontur 10 wird beispielsweise nach Gesichtspunkten wie häufigste Betriebspunkte der Kolbenbrennkraftmaschine, Einsatzzweck der Zusatznockenkontur 11 im Zusammenspiel mit dem ventiltrieb sowie anderen Parametern ausgelegt. Dieses kann von Kolbenbrennkraftmaschine zu Kolbenbrennkraftmaschine unterschiedlich sein.

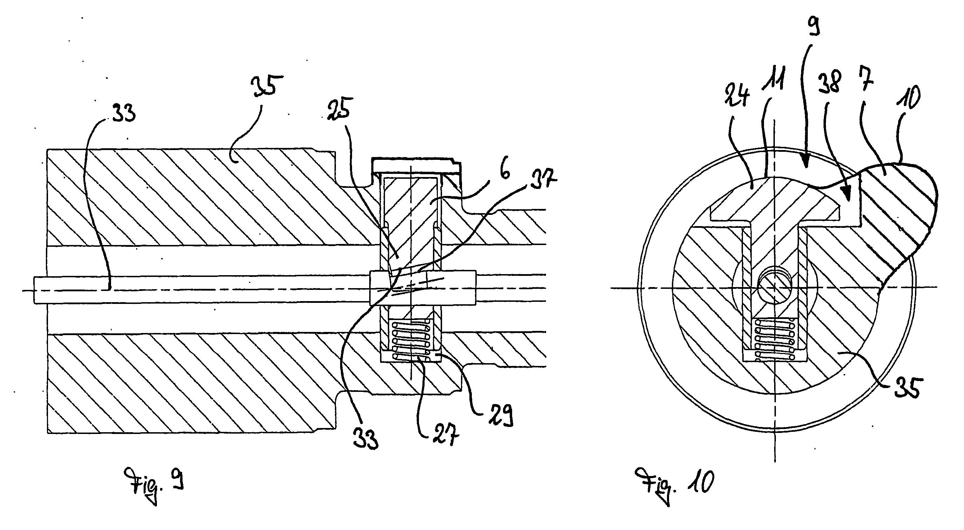

Fig. 9 zeigt einen Längsschnitt durch eine vierte Nockenwelle 35. In der vierten Nockenwelle 35 ist wieder ein Konturkörper 6 angeordnet. Beispielsweise kann der Konturkörper 6 zumindest ähnlich wie derjenige aus Fig. 3 bzw. Fig. 4 geformt und angeordnet sein. In der vierten Nockenwelle 35 verläuft wiederum eine Verstellstange 31, auf der ein Koppelbolzen 36 angeordnet ist. Der Koppelbolzen 36 weist eine Schräge 37 auf, die einen entsprechenden Gegenpart in der Geometrie des Durchgangs 33 des Fußbereiches 25 des Konturkörpers 6 findet. Die Verstellstange 31 wird beispielsweise entlang der Nockenwellenmitte 33 verschoben. Dadurch, daß die Schräge 37 zur winkung gelangt, kann einerseits eine Aktivstellung bzw. Ruhestellung des Konturkörpers 6 eingestellt werden. Andererseits erlaubt die Schräge 37 ein stufenloses Verstellen des Konturkörpers 6 in radialer Richtung. Weiterhin wird einer auf den Konturkörper 6 radial wirkende Kraft auf den Fußbereich 25 des Konturkörpers 6 aufgebracht. Beispielsweise wird dazu in der Aussparung 29 die Feder 27 angeordnet.

Fig. 10 zeigt einen Querschnitt durch die vierte Nockenwelle 35. Der Nocken 7 weist einen Einschnitt 38 auf, in dem der Konturkörper 6 mit seinem Kopfteil 24 angeordnet ist. Die Nockenkontur 10 geht dabei in die zusatznockenkontur 11 über, wobei die Zusatznockenkontur 11 in der Flanke 9 der Nockenkontur 10 angeordnet ist.

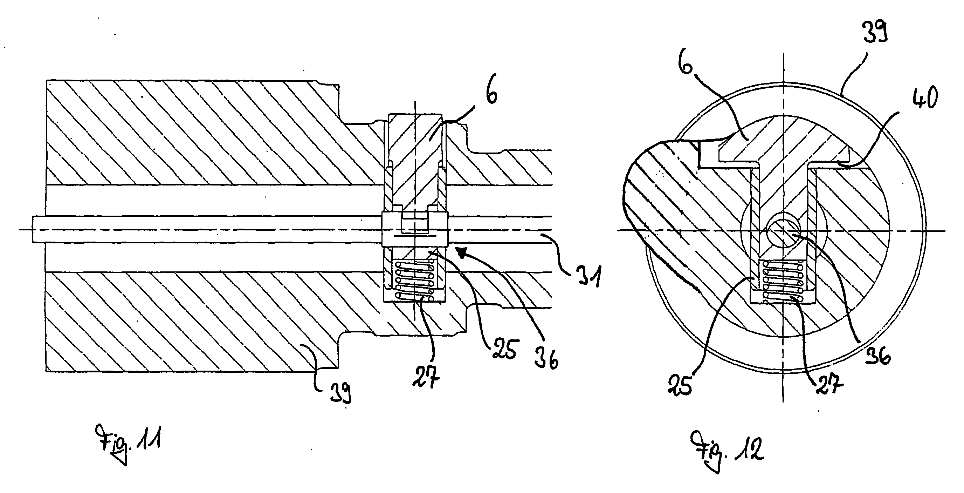

Fig. 11 zeigt einen Längsschnitt durch eine fünfte Nockenwelle 39. In der fünften Nockenwelle 39 ist wiederum beweglich der Konturkörper 6 angeordnet. Eine Verstellung des Konturkörpers 6 erfolgt mittels des Koppelbolzens 36. Dieser erlaubt ein radiales Bewegen des Konturkörpers 6 aufgrund der Radialkraft, die auf den Fußbereich 25 des Konturkörpers 6 vorzugsweise mittels der Feder 27 wirkt. Die Verstellstange 31 mit dem daran angeordneten Koppelbolzen 36 wird gedreht. Dieses verdrehen ermöglicht eine radiale Verstellung des Konturkörpers 6, wie es nachfolgend aus Fig. 12 deutlich hervorgeht.

Fig. 12 zeigt einen Querschnitt durch die fünfte Nockenwelle 39 aus Fig. 11. Im Fußbereich 25 verläuft der Koppelbolzen 36 hindurch, und erlaubt dadurch ein mechanisches Koppeln. Wird der Koppelbolzen 36 verdreht, drückt die Feder 27 gegen den Fußbereich 25. Durch eine exzentrische Lagerung des Koppelbolzens 36 in Bezug zur Nockenwellenmitte 33 wird der Konturkörper 6 zwischen einer Ruhestellung und einer Aktivstellung arretierbar eingestellt. Der Koppelbolzen 36 ermöglicht insbesondere, daß eine mechanische Kraftübertragung über die zusatznockenkontur 11 auf den Koppelbolzen 36 ermöglicht wird. Dadurch kann eine mechanisch wirkende Radialkraft kompensiert werden. Die in Fig. 12 dargestellte Stellung des Konturkörpers 6 ist die Ruhestellung, wobei bei einer radial wirkenden Kraft auf die Zusatznockenkontur 11 der Konturkörper 6 eine Bewegung radialer ausrichtet, sofern die radiale Kraft größer ist als die wirkende Kraft der Feder 27. Auf diese Weise kann beispielsweise die Ruhestellung permanent ein Abheben der Zusatznockenkontur 11 über die Grundkreiskontur 8 erlauben. Andererseits kann auf diese Weise eine Überlastungssicherung vorgesehen sein, die insbesondere ein Schaden an einer Ventilstellwegübertragungsvorrichtung vermeidet. Vorzugsweise wird bei einer Radialbewegung des Konturkörpers 6 das Kopfteil 24 mit Grenzflächen 40 versehen. Die Grenzflächen 40 können beispielsweise auf der Nockenwelle 39 aufliegen, wenn die Kraft der Feder 27 überwunden wird. Auf diese Weise wird der Konturkörper 6 in eine Position gebracht, in der eine Kraftübertragung vom Konturkörper 6 auf die fünfte Nockenwelle 39 sichergestellt und damit ein Überlasten beispielsweise der Verstellstange 31 bzw. des Koppelbolzens ausgeschlossen ist.

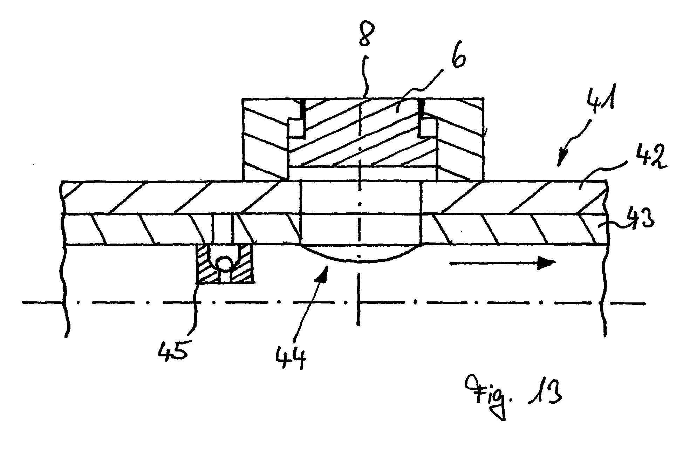

Fig. 13 zeigt einen Längsschnitt durch eine sechste Nockenwelle 41. Die sechste Nockenwelle 41 weist beispielsweise ein Außenrohr 42 auf, in dem ein Innenrohr 43 gelagert angeordnet ist. Auf dem Außenrohr 42 ist die Grundkreiskontur 8 aufgesetzt. In die Grundkreiskontur 8 eingebettet und bündig dazu ist der Konturkörper 6 angeordnet. Im Innenrohr 43 ist ein Fluid, das unter Druck gesetzt werden kann. Das Innenrohr 43 sowie das Außenrohr 42 weisen einen zugang 44 auf, über den das Fluid zum Konturkörper 6 gelangen kann. Steht das Fluid unter Druck, baut sich ein entsprechender Druck unterhalb des Konturkörpers 6 auf. Dieses sich unter diesem befindende Hydraulikpolster kann beispielsweise durch ein verdrehen und/oder Verschieben des Innenrohres 43 gegenüber dem Außenrohr 42 vom übrigen Fluid abgekoppelt werden. Der dann am Konturkörper 6 wirkende Radialdruck bleibt aufrecht erhalten, unabhängig von dem Zustand des Fluids im Innenrohr 43. Der versperrte zugang 44 kann durch eine entsprechende Gegenbewegung wieder freigegeben werden, so daß auf diese Weise das Fluid vom Konturkörper 6 abströmen kann. Weiterhin besteht die Möglichkeit, daß ein Ventil 45, insbesondere ein Rückschlagventil am Innenrohr 43 angeordnet wird. Das Ventil 45 ermöglicht beispielsweise, daß der zugang 44 verschlossen wird und trotzdem ein Fluid zum Konturkörper 6 gelangen kann-Dieses ist insbesondere dann möglich, wenn das im Innenrohr 43 angeordnete Fluid unter einem größeren Druck steht, als das direkt am Konturkörper 6 vorliegende Fluid. Weiterhin ermöglicht das Ventil 45 einen Ausgleich von beispielsweise Leckageverlusten an Fluid, die entlang des Konturkörpers 6 ausgetreten ist.

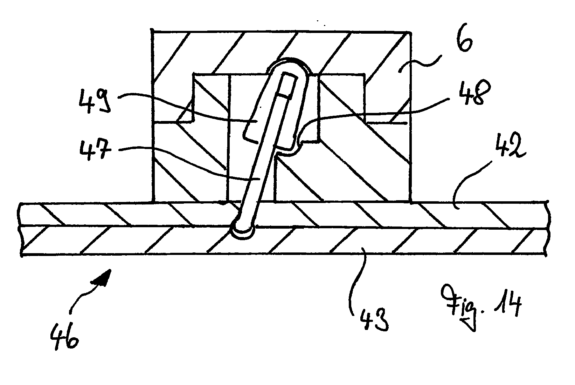

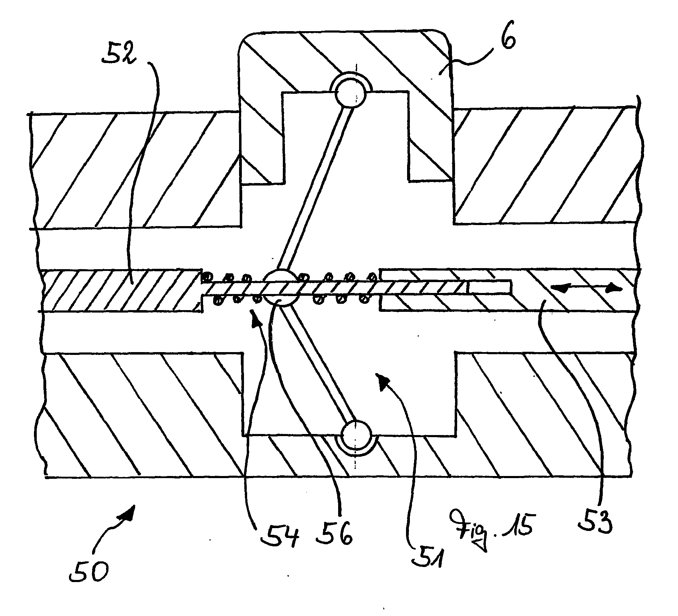

Fig. 14 zeigt einen Längsschnitt durch eine siebte Nockenwelle 46. Die siebte Nockenwelle 46 weist wiederum ein Innenrohr 43 und ein Außenrohr 42 auf. Der Konturkörper 6 wird mechanisch in seiner Position dadurch verändert, daß eine gelenkige Verbindung zwischen dem Konturkörper 6 und dem Innenrohr 43 hergestellt wird. Ein Gelenkhebel 47 ist verschwenkbar angeordnet, wobei durch eine Schwenkbewegung der Konturkörper 6 aus- und wieder eingefahren werden kann. Hierzu wird beispielsweise das Innenrohr 43 axial verschoben, wodurch ein Teil des Gelenkhebels 47 auf einer Führung 48 entlang gleitet. Dadurch wirkt eine Druckkraft auf den Konturkörper 6, die durch eine Schiebeelement 49 übertragen wird. Das Schiebeelement 49 wird über den Gelenkhebel 47 geführt. Durch Abgleiten des Schiebeelementes 49 entlang der Führung 48 wird bei gleichzeitiger Lageänderung des Gelenkhebels 47 eine Druckkraft auf den Konturkörper 6 ausgeübt. Dadurch verschiebt sich dieser Punkt. Ein Zurückfahren des Konturkörpers 6 erfolgt beispielsweise aufgrund einer außen anliegenden Rückstellkraft, die nach Zurückgleiten des Innenrohres 43 und damit zurückschwenken des Gelenkhebels 47 sowie des Schiebeelementes 49 entlang der Führung 48 ein Aufschieben der Arretierung und damit ein Zurückfahren des Konturkörpers ermöglicht. Weiterhin besteht die Möglichkeit, das der Gelenkhebel 47 beziehungsweise das Schiebeelement 49 mit dem Konturkörper sechsgelenkig gekoppelt ist. Die aus Fig. 14 hervorgehende Ausgestaltung einer Einstellmöglichkeit des Konturkörpers 6 gibt das Prinzip der mechanischen Kopplung von Konturkörper 6 und einem entsprechenden Stellmittel wieder. Fig. 15 zeigt eine weitere Möglichkeit, eine mechanische Kopplung zur Verstellung des Konturkörpers auszuführen.

Fig. 15 zeigt einen Längsschnitt durch eine achte Nockenwelle 50. Aus dieser Figur geht das Prinzip eines Kniehebels als Stellmittel für den Konturkörper 6 hervor. Hierzu kann beispielsweise die achte Nockenwelle 50 ein Schiebestangensystem 51 aufweisen. Eine Schiebestange 52 ist axial entlang der achten Nockenwelle 50 in einer Axialführung 53 beweglich geführt. Das Schiebestangensystem 51 steht vorzugsweise unter einer Eigenspannung. Diese Eigenspannung wird insbesondere mittels eines Federsystems 54 erzeugt. Dazu wird beispielsweise zwischen der Schiebestange 52 und der Axialführung 53 eine oder mehrere Federn, vorzugsweise Spiralfedern 55 angeordnet. Die Spiralfedern 55 können Axialkräfte erzeugen, die bei Verstellung der Schiebestange 52 eine Bewegung des Konturkörpers 6 in radialer Richtung zur achten Nockenwelle 50 bewirken. Hierzu ist auf der Schiebestange 52 ein Kulissenstein 56 angeordnet, der einerseits eine gelenkige Verbindung zum Konturkörper 6 und andererseits eine gelenkige Verbindung zur achten Nockenwelle 50 besitzt. Vorzugsweise ist diese gelenkige Verbindung in ihrem Zusammenspiel derart ausgeführt, daß sie ein Kniehebelsystem erzeugen. Dieses Kniehebelsystem hat den Vorteil, daß in einer Aktivstellung des Konturkörpers 6 eine automatische Arretierung des Schiebestangensystems 51 erfolgt. Diese automatische Arretierung kann erst dann wieder aufgehoben werden, wenn die Schiebestange 52 zurückfährt, so daß die Rückstellkraft der Spiralfedern 55 die Arretierungskraft des Schiebestangensystems 51 überwindet.

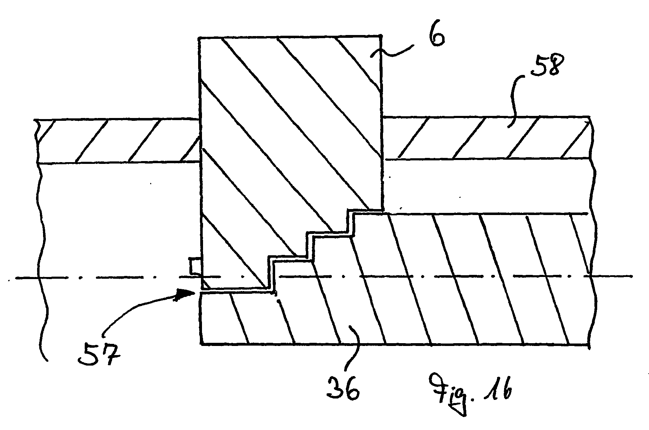

Fig. 16 zeigt ein weiteres mechanisches Verstellsystem für den Konturkörper 6. Hierzu wird beispielsweise eine stufenartige Geometrie 57 vorgesehen, die eine Kopplung des Konturkörpers 6 mit beispielsweise dem Koppelbolzen 36 schafft. Die stufenförmige Geometrie 57 erlaubt einerseits ein schrittweises Verstellen des Konturkörpers 6 in radialer Richtung. Andererseits erlaubt die stufenförmige Geometrie 57 eine, über eine breite Fläche wirkende Abstützung des Konturkörpers 6 zur Aufnahme und Übertragung von radial wirkenden Kräften. Dieses vermeidet insbesondere eine Punktbelastung, die eine Materialbeschädigung nach sich ziehen kann. Weiterhin weist die stufenförmige Geometrie 57 den vorteil auf, daß eine radiale Bewegung des Konturkörpers 6 mittels einer Übersetzung erfolgt. Wird beispielsweise eine Stellbewegung in axialer Richtung der neunten Nockenwelle 58 ausgeführt, wird diese Axialbewegung mittels eines Übersetzungsverhältnisses in eine Radialbewegung des Konturkörpers 6 übertragen. Beispielsweise kann ein Übersetzungsverhältnis von Axialweg zu Radialweg in einem Bereich zwischen 1:1 und 1:5, insbesondere zwischen 1: 2 und 1:4 und vorzugsweise zwischen 1:2 und 1:3 liegen. Auf diese Weise läßt sich beispielsweise eine Schaltzeit für den Konturkörper 6 minimieren. Vorzugsweise ist der Konturkörper 6 in seiner Aktivstellung aus der Ruhestellung innerhalb von 0,75 Millisekunden und weniger schaltbar. Durch eine Kopplung des Weges kann eine proportional dazu festgelegte Schaltzeit mittels des Übertragungsverhältnisses verkürzt werden. Neben einer Ausgestaltung der stufenförmigen Geometrie 57 kann hierzu auch jede andere Ausgestaltung Verwendung finden, die ein Übersetzungsverhältnis und damit eine Verringerung der Schaltzeit ermöglicht. Dieses kann beispielsweise mittels spiralförmiger, schneckenförmiger oder sonstiger getriebeähnlicher Übersetzung erfolgen. Weiterhin hat diese Art der mechanischen Kopplung des Konturkörpers 6 den vorteil, daß auf diesen einwirkende Radialkräfte sicher aufgefangen und abgeleitet werden können. Zusätzlich wird eine genaue Führung des Konturkörpers 6 gewährleistet.

Eine weiterbildung der aus Fig. 16 hervorgehenden Ausgestaltung sieht vor, daß im Inneren der neunten Nockenwelle 58 ein Fluid angeordnet ist. Das Fluid kann unter Druck gesetzt werden. Aufgrund der Gestaltung der stufenförmigen Geometrie 57 besteht die Möglichkeit, daß ein druckwirksamer Spalt zwischen dem Koppelbolzen 36 und dem Konturkörper 6 vorhanden ist. Wird der Druck des Fluids erhöht, wirkt dadurch eine höhere Radialkraft auf den Konturkörper 6. Dadurch kann der Konturkörper 6 radial nach außen gleiten. Durch eine entsprechende Nachstellbewegung des Koppelbolzens 36 wird der Konturkörper 6 anschließend über die stufenförmige Geometrie 57 gesichert und abgestützt. Eine von außen auf den Konturkörper 6 aufgebrachte Druckkraft wird somit nicht durch das Fluid, sondern durch den Koppelbolzen 36 aufgenommen.

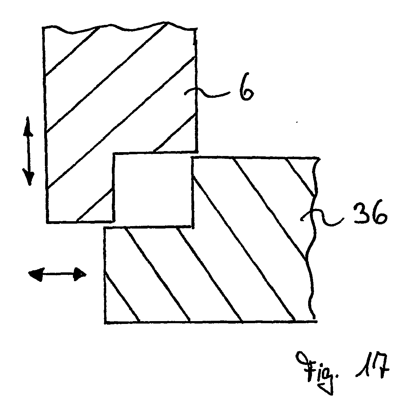

Fig. 17 zeigt eine weitere Ausgestaltung, die in Anlehnung zu derjenigen aus Fig. 16 erfolgt. Fig. 17 zeigt anhand einer einstufigen Geometrie die Verschiebemöglichkeit des Konturkörpers 6 in Abhängigkeit von der Bewegungsrichtung des Koppelbolzens 36. Die Bewegung des Konturkörpers 6 kann beispielsweise über eine wirkende Fluiddruckkraft wie aber auch durch andere Krafterzeugung bewirkt werden. Dieses kann beispielsweise eine Federkraft oder ähnliches sein.

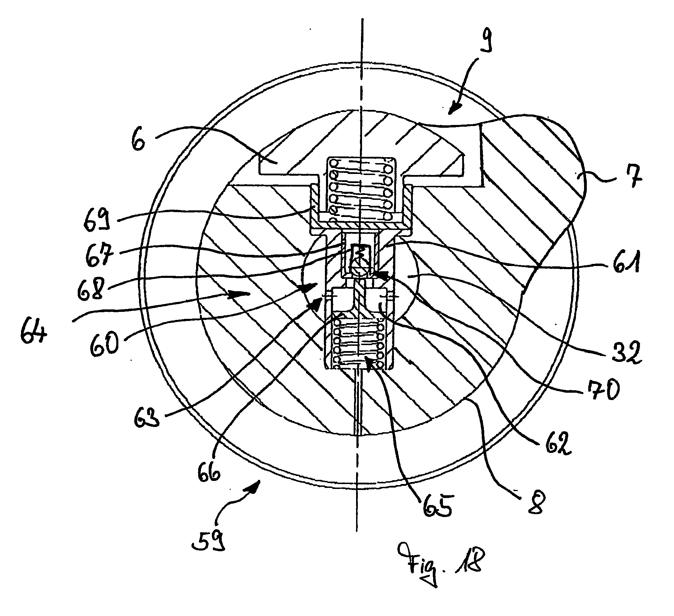

Fig. 18 zeigt einen Querschnitt durch eine zehnte Nockenwelle 59. Die zehnte Nockenwelle 59 weist einen Nocken 7 und einen Konturkörper 6 auf, der zumindest teilweise in der Flanke 9 des Nocken 7 angeordnet ist. Die zehnte Nockenwelle 59 weist einen Hohlbereich 32 auf, der entlang der Nockenwellenmitte 33 angeordnet ist. In dem Hohlbereich 32 ist ein Fluid angeordnet, das einen einstellbar veränderlichen Druck aufweist. Dieser Fluiddruck wird auf eine Druckübertragungsvorrichtung 60 aufgeprägt. Die Druckübertragungsvorrichtung 60 ermöglicht ein radiales Ein- bzw. Ausfahren der Konturkörperabstützung und damit des Konturkörpers 6 in Abhängigkeit von zumindest dem Druckfluid. Bei der in Fig. 18 dargestellten Ausgestaltung der Druckübertragungsvorrichtung 60 ist ein Hohlzylinder 61 vorgesehen, dessen Inneres 62 über Fluiddurchgänge 63 mit dem Fluiddruck beaufschlagt wird. Im Inneren 62 des Hohlzylinders 61 ist ein Verstellsystem 64 angeordnet. Das Verstellsystem 64 weist eine unter Druck stehende Kammer 65 auf. In dieser Kammer 65 ist beispielsweise ein unter Druck stehendes Medium und/oder eine Feder angeordnet, die einer im Inneren 62 durch das Fluid wirkenden Druckkraft auf ein, die Kammer 65 beschränkenden Stempel 66 entgegenwirkt. Aufgrund der jeweiligen Druckdifferenz wird der Stempel 66 radial in die eine oder die andere Richtung bewegt. Dem Stempel 66 zugeordnet ist eine fest im Hohlzylinder 61 angeordnete Buchse 67 mit einem Buchsenhohlraum 68. Eine Bewegung des Stempels 66 führt zu einer Bewegung in oder aus der Buchse 67 heraus. Herrscht ein niedriger Druck im Hohlbereich 32, sorgt der Stempel 66 für ein Anheben der Kugel. Bei einer Druckerhöhung im Hohlbereich 32 wird die Kugel freigegeben, der Buchsenhohlraum 68 füllt sich, wird aber durch das Versperren der Öffnung in der Buchse 67 mittels der Kugel nicht entleert. Die Kugel ist somit eine mögliche Ausgestaltung eines Rückschlagventils zur Druckkontrolle. Hierzu kann die Kugel beispielsweise nur entlang einer Führung bewegt werden. Auch kann die Kugel selbst druckbeaufschlagt sein, beispielsweise mittels einer Feder. Durch den Kontakt einer Bodenplatte 69, auf der der Konturkörper 6 abgestützt ist, herrscht eine Druckkraft im Buchsenhohlraum 68. Somit liegt zwischen der Bodenplatte 69 und dem Konturkörper 6 eine Druckkraft an. Herrscht beispielsweise ein Hochdruck im Buchsenhohlraum 68, wird der Konturkörper in einer Position gehalten. Nach einem Überrollen des Konturkörpers 6 kann eine Leckage durch das Rückschlagventil ausgeglichen werden.

Die Druckkraft wird beispielsweise auch mittels einer Feder erzeugt, über die eine radial wirkende Kraft von der Bodenplatte 69 auf den Konturkörper 6 wirkt. Herrscht nun im Inneren 62 des Hohlzylinders 61 eine Druckkraft, so überträgt sich dieses einerseits auf den Stempel 66. Andererseits wird die Buchse 67 ebenfalls mit diesem Druck beaufschlagt. Die Buchse 67 weist ein Druckventil 70 auf, über das der Buchsenhohlraum 68 vom Inneren 62 getrennt werden kann. Der vom Inneren 62 in den Buchsenhohlraum 68 übertragene Druck wirkt auf die Bodenplatte 69 und erfährt andererseits die zwischen der Bodenplatte 69 und dem Konturkörper 6 wirkende Kraft. Bei einer an der Bodenplatte 69 herrschenden Druckdifferenz wird eine entsprechende Radialbewegung ausgeführt, die dann zur Verstellung des Konturkörpers 6 führt. Ist der Fluiddruck im Inneren 62 hoch genug, werden dadurch die entgegenwirkenden Radialkräfte kompensiert und es wirkt eine Stellkraft, wodurch der Konturkörper 6 über die Grundkreiskontur 8 hinaus verschoben wird. Durch ein Absinken des Fluiddruckes im Inneren 62 ändert sich das Kräfteverhältnis, so daß die Bodenplatte 69 sich wieder absenkt. Der Konturkörper 6 wird jedoch durch die zwischen der Bodenplatte 69 und dem Konturkörper 6 angeordnete Feder in einer definierbaren Stellung gehalten. Mittels einer derartigen Druckübertragungsvorrichtung 60 gelingt es, daß eine Kraftübertragung bei einer Aktivstellung des Konturkörpers 6 hydraulisch abgestützt wird. Bei einer Ruhestellung des Konturkörpers 6 dagegen wird der Öldruck soweit abgesenkt, daß der Konturkörper 6 allen über eine permanent wirkende Kraft abgefedert wird. Bei dieser Ausgestaltung ist es beispielsweise möglich, daß der Konturkörper in der Aktivstellung wie in der Ruhestellung dieselbe Position einnimmt.

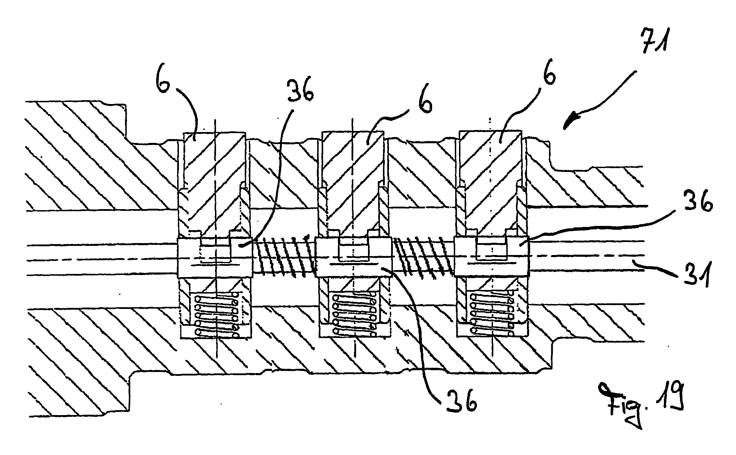

Fig. 19 zeigt einen Längsschnitt durch eine elfte Nockenwelle 71. Die elfte Nockenwelle 71 weist drei nebeneinander angeordnete Konturkörper 6 auf, die über ein mechanisches verstellsystem miteinander verbunden sind. Das verstellsystem kann beispielsweise eine Verstellstange 31 aufweisen, die die Koppelbolzen, 36 der Konturkörper 6 miteinander verbindet. Durch diese mechanische Verbindung der Koppelbolzen 36 wird bei einer Betätigung eines einzelnen Konturkörpers 6 eine entsprechende Bewegung auf die übrigen Konturkörper 6 übertragen. Beispielsweise erfolgt eine mechanische Kopplung der Koppelbolzen 36 untereinander über ein Federsystem, wobei beispielsweise Drehfedern oder axial wirkende Federn zwischen den Koppelbolzen 36 angeordnet sind. Wird der erste Koppelbolzen 36 betätigt, überträgt sich dessen Bewegung über das Federsystem auf den nächsten, benachbarten Koppelbolzen 36. Auf diese Weise wird bei Initiierung eine Radialbewegung für einen Konturkörper 6 nacheinander eine entsprechende Bewegung der übrigen Konturkörper 6 ausgelöst. Insbesondere erlaubt dieses, daß gemäß der in Fig. 19 dargestellten Ausgestaltung die Koppelbolzen 36 axial verschoben werden und dadurch in einem kraftfreien Zustand den Konturkörper 6 mechanisch absichern. Wird anschließend eine Kraft auf den Konturkörper 6 aufgeprägt, wird diese über den dann angekoppelten Koppelbolzen 36 weitergeleitet.

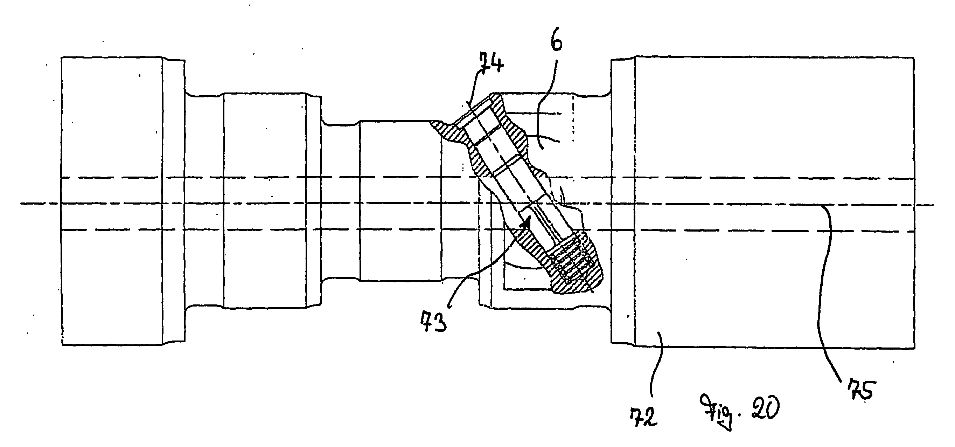

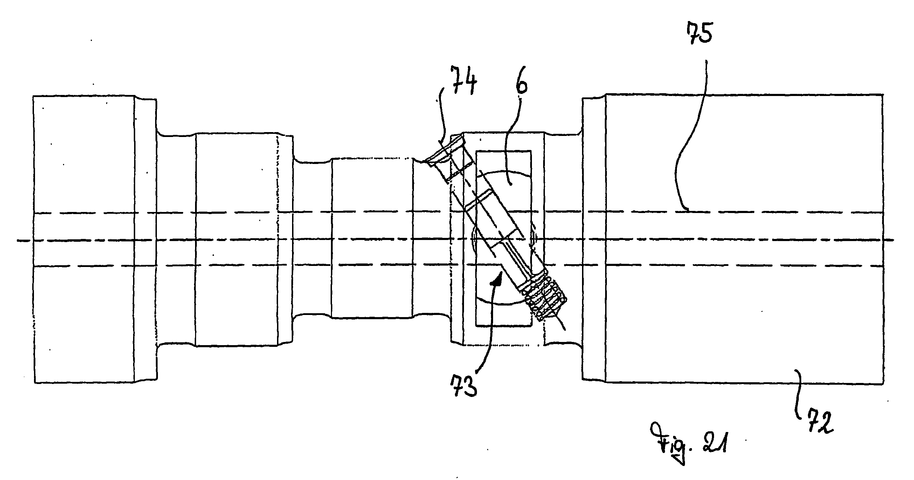

Fig. 20 und Fig. 21 zeigen eine weitere Ausgestaltung einer Koppelung des Konturkörpers 6, der in einer zwölften Nockenwelle 72 angeordnet ist. Während in Fig. 20 ein Ausschnitt eines Koppelelementes 73 zu sehen ist, ist in Fig. 21 die Lage des Koppelelementes 73 in Bezug zum Konturkörper 6 verdeutlicht dargestellt. Das Koppelelement 73 weist eine Achse 74 auf, die in einem Winkel zu einer Nockenwellenachse 75 angeordnet ist. Durch die winklige Anordnung der Achse 74 ist einerseits eine einfachere Bearbeitung der zwölften Nockenwelle 72 möglich. Das Einbringen einer entsprechenden Sackbohrung kann mit großer Präzision vorgenommen werden. Weiterhin erlaubt die winklige Anordnung, daß bei einem Koppeln des Koppelelementes 73 mit dem Konturkörper 6 eine Kraftübertragung mittels eines radial wirkenden und eines axial wirkenden Kraftanteils erfolgt. Dieses verbessert eine Sicherheit der Kraftübertragung und vermeidet insbesondere eine Punkt- bzw. Linienbelastung der kraftübertragenden Elemente.

Die vorliegende Erfindung eignet sich insbesondere zur Anwendung bei Dieselmotoren, die im stationären bzw. instationären Betrieb betrieben werden. Vorzugsweise wird die Erfindung für eine interne Abgasrückführung eingesetzt. Vorzugsweise wird diese mit der Möglichkeit einer Motorbremse kombiniert.

## Patentansprüche

1. Kolbenbrennkraftmaschine (1) mit Gaseinlassventilen und Gasauslassventilen, die über zumindest eine Nockenwelle (3) betätigbar sind, wobei ein Nocken (7) als Steuerkontur eine Grundkreiskontur (8) und eine die Grundkreiskontur (8) radial überragende Nockenkontur (10) aufweist, wobei ein Konturkörper (6) mit einer Zusatznockenstruktur (11) eine Ruhestellung aufweist, die gleichzeitig seine Aktivstellung ist, wobei der Konturkörper in seiner Ruhestellung permanent nachgiebig über die Grundkreiskontur hinausragt und bei einem Überfahren mit einem Kraftübertragungsglied radial in die Grundkreiskontur (8) eingedrückt wird und in seiner Aktivstellung die permanente Nachgiebigkeit blockiert ist, wobei der Konturkörper (6) mit einer Zusatznockenkontur (11) mittels einer Stelleinrichtung (5) in eine Aktivstellung bringbar ist, wobei die Stelleinrichtung zur Krafterzeugung eine Hydraulikeinrichtung aufweist, mittels der eine Absicherung der Stellung des Konturkörpers erfolgt, **dadurch gekennzeichnet, dass** der Konturkörper (6) mit einer Zusatznockenkontur (11) in einer Flanke (9) der Nockenkontur (10) so angeordnet ist, dass der Konturkörper in seiner Aktivstellung eine innere Abgasrückführung ermöglicht.

2. Kolbenbrennkraftmaschine (1) nach einem der vorhergehenden Ansprüche, **dadurch gekennzeichnet, dass** die Zusatznockenkontur (11) zumindest in unmittelbarer Nähe vor einem Übergang der Nockenkontur (10) in die Grundkreiskontur (8) des Nocken (7) angeordnet ist.

3. Verwendung einer Kolbenbrennkraftmaschine (1) nach einem der vorhergehenden Ansprüche 1 oder 2 bei einer inneren Abgasrückführung zur Verringerung eines Schadstoffausstoßes im Abgas.

## Claims

1. A piston combustion engine (1) having gas inlet valves and gas outlet valves actuatable via at least one camshaft (3), wherein a cam (7) has a basic circular contour (8) and a cam contour (10), radially projecting beyond the basic circular contour (8), as a control contour, wherein a contoured body (6) with an additional cam structure (11) has a rest position which is simultaneously its active position, wherein the contoured body in its rest position permanently projects out beyond the basic circular contour in a yielding manner and is radially pushed into the basic circular contour (8) when traversed by a power transmission member and in its active position the ongoing yielding ability is blocked, wherein the contoured body (6) with an additional cam contour (11) can be brought into an active position by means of an adjusting device (5), wherein the adjusting device has for power generation an hydraulic device by means of which the position of the contoured body can be assured, **characterised in that** the contoured body (6) with an additional cam contour (11) is arranged in a flank (9) of the cam contour (10) in such a manner that the contoured body enables an inner exhaust-gas recirculation in its active position.

2. A piston combustion engine (1) according to any one of the preceding claims, **characterised in that** the additional cam contour (11) is arranged at least right before a transition of the cam contour (10) into the basic circular contour (8) of the cam (7).

3. Use of a piston combustion engine (1) according to one of the preceding claims 1 and 2 with an inner exhaust-gas recirculation to reduce pollutant emission in the exhaust gas.

## Revendications

1. Moteur à combustion interne à piston (1) avec des soupapes d'admission de gaz et des soupapes d'échappement de gaz, qui peuvent être actionnées par l'intermédiaire d'au moins un arbre à cames (3), une came (7) comportant un contour circulaire de base (8), formant un contour de commande, et un contour de came (10) s'avançant radialement au-delà du contour circulaire de base (8), un corps de contour (6) avec une structure de came supplémentaire (11) possédant une position de repos, qui est en même temps sa position active, le corps de contour dans sa position de repos s'avançant en permanence de manière flexible au-delà du contour circulaire de base et étant poussé radialement dans le contour circulaire de base (8) lorsqu'un organe de transmission de force passe au-dessus dudit corps de contour, et sa flexibilité permanente étant bloquée dans sa position active, le corps de contour (6) avec un contour de came supplémentaire (11) pouvant être amené dans une position active au moyen d'un dispositif de réglage (5), ledit dispositif de réglage comportant un dispositif hydraulique pour générer une force, au moyen duquel se produit un blocage de la position du corps de contour, **caractérisé en ce que** le corps de contour (6) avec un contour de came supplémentaire (11) est disposé dans un flanc (9) du contour de came (10), de telle sorte que le corps de contour dans sa position active permet un retour intérieur des gaz d'échappement.

2. Moteur à combustion interne à piston (1) selon l'une des revendications précédentes, **caractérisé en ce que** le contour de came supplémentaire (11) est disposé au moins à proximité immédiate en amont de la transition du contour de came (10) vers le contour circulaire de base (8) de la came (7).

3. Utilisation d'un moteur à combustion interne à piston (1) selon l'une des revendications précédentes 1 ou 2 avec un retour intérieur des gaz d'échappement pour diminuer un échappement de matières polluantes.
